# EUROPEAN PATENT SPECIFICATION

(11) **EP 3 002 969 B1**
(45) Date of publication and mention of the grant of the patent: **30.01.2019**
(21) Application number: 14816916.2
(22) Date of filing: 26.02.2014
(51) Int. Cl.: H04W 16/24, H04W 88/08

(54) **COMMUNICATION METHOD AND DEVICE**
KOMMUNIKATIONSVERFAHREN UND -VORRICHTUNG
PROCÉDÉ ET DISPOSITIF DE COMMUNICATION

(30) Priority: 26.06.2013 CN 201310260403
(43) Date of publication of application: 06.04.2016
(60) Divisional application: 18207745.3
(73) Proprietor: Huawei Technologies Co., Ltd., Longgang District Shenzhen, Guangdong 518129 (CN)
(72) Inventor: DONG, Wei, Shenzhen Guangdong 518129 (CN)
(74) Representative: Pfenning, Meinig & Partner mbB
(86) International application number: PCT/CN2014/072556
(87) International publication number: WO 2014/206106

(56) References cited:
- EP-A2- 2 493 090
- CN-A- 101 394 647
- CN-A- 102 546 504
- CN-A- 102 647 371
- CN-A- 103 024 946
- CN-A- 103 338 464
- US-A1- 2011 069 693
- US-A1- 2011 069 693
- US-A1- 2012 176 966

## Description

### TECHNICAL FIELD

The present invention relates to the communications field, and more specifically, to a communications method and device used in a cell combination system.

### BACKGROUND

Currently, a research focus of a Long Term Evolution (Long Term Evolution, LTE) network is how to combine coverage areas of remote radio units (Remote Radio Unit, RRU) of different types (for example, single-channel or multi-channel), to perfect cell coverage and improve signal quality. For example, an N1-channel RRU and an N2-channel RRU are used for networking. This type of networking may be called an N1+N2 combination for short, and the scenario may also be referred to as an N1+N2 cell combination. For another example, an N1-channel RRU, an N2-channel RRU, and an N3-channel RRU are used for networking. This type of networking may be called an N1+N2+N3 combination for short, and the scenario may also be referred to as an N1+N2+N3 cell combination. For still another example, an N1-channel RRU, an N2-channel RRU, an N3-channel RRU, and an N4-channel RRU are used for networking. This type of networking may be called an N1+N2+N3+N4 combination for short, and the scenario may also be referred to as an N1+N2+N3+N4 cell combination. N1, N2, N3, and N4 may be 1, or 2, or 4, or 8.

However, in the prior art, in a cell combination scenario, only a limited quantity of logical ports can be configured for a baseband unit (Baseband Unit, BBU), and the quantity of logical ports configured for the BBU must be less than or equal to a quantity of physical antennas of an RRU that has a minimum quantity of channels in the scenario. For example, in an N1+N2 scenario, N1 is 8 and N2 is 1. Because the quantity of logical ports configured for the BBU needs to be less than or equal to a quantity of physical antennas of the N2-channel RRU, only one logical port can be configured for the BBU. Then, the BBU can process a signal corresponding to only one logical port for an N1-channel RRU, and transmits the signal by using the N1-channel RRU, thereby causing low cell capacity.

Document US 2012/176966 A1 discloses a method provide signal compression for transfer over serial data links in a base transceiver system of a wireless communication network.

Document CN 10254650 4 A discloses a frequency domain transmission method and apparatus. It is about that perform IFFT for downlink frequency domain baseband signals mapped to corresponding subcarriers, to obtain downlink time domain baseband signals, and to transmit the downlink time domain baseband signals.

Document EP 2493090A2 discloses that transceiver set selection and communication scheme for a distributed antenna system, it recites that a logical port corresponds to multiple physical antenna ports.

Document US 2011/069693 A1 refers multicarrier Dual Stream MIMO Transmission. It discloses that he same two streams are transmitted on the different carriers.

### SUMMARY

The present invention is as defined in the appended independent claims. Embodiments of the present invention provide a communications device, a communications method, a communications apparatus, which can resolve an existing problem of relatively low cell capacity caused because in a cell combination scenario, only a limited quantity of logical ports can be configured for a BBU, and the quantity of logical ports configured for the BBU must be less than or equal to a quantity of physical antennas of an RRU that has a minimum quantity of channels in the scenario.

The aspects, embodiments and/or examples of the following description which are not covered by the appended claims are considered as not being part of the present invention.

According to a first aspect, a communications device is provided, where the communications device includes a BBU and an RRU that has n physical antenna or physical antennas; the BBU and the RRU are connected by using an optical fiber; the n is 1 or 2; the BBU is configured to: acquire four channels of signals; generate a baseband digital signal based on at least two channels of signals in the four channels of signals; transmit the baseband digital signal to the RRU through the optical fiber, where the four channels of signals are in a one-to-one correspondence with four logical ports of the BBU; and the RRU is configured to convert the baseband digital signal into a radio-frequency signal, and transmit the radio-frequency signal by using the n physical antenna or physical antennas.

With reference to the first aspect, in a first possible implementation manner of the first aspect, the n is 1, and that the BBU is configured to generate a baseband digital signal based on at least two channels of signals in the four channels of signals includes: that the BBU is configured to generate the baseband digital signal by adding up m channels of signals in the four channels of signals, where the m is 2, or 3, or 4.

With reference to the first possible implementation manner of the first aspect, in a second possible implementation manner of the first aspect, the BBU is further configured to determine m logical ports, where the m channels of signals corresponding to the m logical ports are used to generate the baseband digital signal.

With reference to the second possible implementation manner of the first aspect, in a third possible implementation manner of the first aspect, that the BBU is configured to determine the m logical ports includes: that the BBU is configured to select all the four logical ports; or that the BBU is configured to select two or three of the four logical ports.

With reference to the third possible implementation manner of the first aspect, in a fourth possible implementation manner of the first aspect, the BBU is further configured to: when selecting two or three of the four logical ports, enable an unselected logical port of the four logical ports to be unconnected.

With reference to the second possible implementation manner, the third possible implementation manner, or the fourth possible implementation manner of the first aspect, in a fifth possible implementation manner of the first aspect, that the BBU is configured to determine m logical ports includes: that the BBU is configured to determine the m logical ports according to saved or acquired logical port numbers of the m logical ports; or that the BBU is further configured to; after determining the m logical ports, save logical port numbers of the m logical ports.

With reference to the first aspect, in a sixth possible implementation manner of the first aspect, the n is 2 and the baseband digital signal includes a first baseband digital signal and a second baseband digital signal; that the BBU is configured to generate a baseband digital signal based on at least two channels of signals in the four channels of signals includes: that the BBU is configured to generate the first baseband digital signal by adding up two signals of the four channels of signals, and generate the second baseband digital signal by adding up the other two signals of the four channels of signals; or that the BBU is configured to use one signal of the four channels of signals as the first baseband digital signal, and use another signal of the four channels of signals as the second baseband digital signal.

With reference to the sixth possible implementation manner of the first aspect, in a seventh possible implementation manner of the first aspect, that the RRU is configured to convert the baseband digital signal into a radio-frequency signal, and transmit the radio-frequency signal by using the n physical antenna or physical antennas includes: that the RRU is configured to convert the first baseband digital signal into a first radio-frequency signal, convert the second baseband digital signal into a second radio-frequency signal, transmit the first radio-frequency signal by using one physical antenna of the two physical antennas, and transmit the second radio-frequency signal by using the other physical antenna of the two physical antennas.

With reference to the sixth or the seventh possible implementation manner of the first aspect, in an eighth possible implementation manner of the first aspect, the BBU is further configured to determine a first port group and a second port group, where the first port group includes two logical ports of the four logical ports, and two signals corresponding to the two logical ports are used to generate the first baseband digital signal; the second port group includes the other two logical ports of the four logical ports, and two signals corresponding to the other two logical ports are used to generate the second baseband digital signal; or the first port group includes two logical ports of the four logical ports, and one signal corresponding to one logical port of the two logical ports is used as the first baseband digital signal; the second port group includes the other two logical ports of the four logical ports, and one signal corresponding to one logical port of the other two logical ports is used as the second baseband digital signal.

With reference to the eighth possible implementation manner of the first aspect, in a ninth possible implementation manner of the first aspect, the BBU is further configured to enable some of the logical ports to be unconnected, and the some of the logical ports are in a one-to-one correspondence with signals of the four channels of signals that are not used to generate the first baseband digital signal and the second baseband digital signal.

With reference to the eighth or the ninth possible implementation manner of the first aspect, in a tenth possible implementation manner of the first aspect, that the BBU is configured to determine a first port group and a second port group includes: that the BBU is configured to determine the first port group and the second port group according to a correspondence between the first port group and logical port numbers of the two logical ports and a correspondence between the second port group and logical port numbers of the other two logical ports, where the correspondences are saved or acquired; or that the BBU is further configured to: after determining the first port group and the second port group, save a correspondence between the first port group and logical port numbers of the two logical ports and a correspondence between the second port group and logical port numbers of the other two logical ports.

With reference to the first aspect or any one of the first to the tenth possible implementation manners of the first aspect, in an eleventh possible implementation manner of the first aspect, the RRU has n channel or channels, and the n channel or channels is in a one-to-one correspondence with the n physical antenna or physical antennas.

With reference to the first aspect or any one of the first to the eleventh possible implementation manners of the first aspect, in a twelfth possible implementation manner of the first aspect, the device is a base station.

According to a second aspect, a communications method is provided, where the method includes: acquiring, by a BBU, four channels of signals, where the four channels of signals are in a one-to-one correspondence with four logical ports of the BBU; generating, by the BBU, a baseband digital signal based on at least two channels of signals in the four channels of signals; and transmitting, by the BBU, the baseband digital signal to an RRU that has n physical antenna or physical antennas, so that the RRU transmits, by using the n physical antenna or physical antennas, a radio-frequency signal into which the baseband digital signal is converted, where the n is 1 or 2.

With reference to the second aspect, in a first possible implementation manner of the second aspect, the n is 1, and the generating, by the BBU, a baseband digital signal based on at least two channels of signals in the four channels of signals includes: generating, by the BBU, the baseband digital signal by adding up m channels of signals in the four channels of signals, where the m is 2, or 3, or 4.

With reference to the first possible implementation manner of the second aspect, in a second possible implementation manner of the second aspect, the method further includes: determining, by the BBU, m logical ports, where the m channels of signals corresponding to the m logical ports are used to generate the baseband digital signal.

With reference to the second possible implementation manner of the second aspect, in a third possible implementation manner of the second aspect, the determining, by the BBU, the m logical ports includes: selecting, by the BBU, all the four logical ports; or selecting, by the BBU, two or three of the four logical ports.

With reference to the third possible implementation manner of the second aspect, in a fourth possible implementation manner of the second aspect, the method further includes: when selecting two or three of the four logical ports, enabling, by the BBU, an unselected logical port of the four logical ports to be unconnected.

With reference to any one of the second to the fourth possible implementation manners of the second aspect, in a fifth possible implementation manner of the second aspect, the determining, by the BBU, m logical ports includes: determining, by the BBU, the m logical ports according to saved or acquired logical port numbers of the m logical ports; or after the determining, by the BBU, m logical ports, the method further includes: saving, by the BBU, logical port numbers of the m logical ports.

With reference to the second aspect, in a sixth possible implementation manner of the second aspect, the n is 2 and the baseband digital signal includes a first baseband digital signal and a second baseband digital signal; the generating, by the BBU, a baseband digital signal based on at least two channels of signals in the four channels of signals includes: generating, by the BBU, the first baseband digital signal by adding up two signals of the four channels of signals, and generating the second baseband digital signal by adding up the other two signals of the four channels of signals; or using, by the BBU, one signal of the four channels of signals as the first baseband digital signal, and using another signal of the four channels of signals as the second baseband digital signal.

With reference to the second aspect or any one of the first to the sixth possible implementation manners of the second aspect, in a seventh possible implementation manner of the second aspect, the method further includes: converting, by the RRU, the baseband digital signal into a radio-frequency signal, and transmitting the radio-frequency signal by using the n physical antenna or physical antennas.

With reference to the seventh possible implementation manner of the second aspect, in an eighth possible implementation manner of the second aspect, when the n is 2 and the baseband digital signal includes the first baseband digital signal and the second baseband digital signal, the converting, by the RRU, the baseband digital signal into a radio-frequency signal, and transmitting the radio-frequency signal by using the n physical antenna or physical antennas includes: converting, by the RRU, the first baseband digital signal into a first radio-frequency signal, converting the second baseband digital signal into a second radio-frequency signal, transmitting the first radio-frequency signal by using one physical antenna of the two physical antennas, and transmitting the second radio-frequency signal by using the other physical antenna of the two physical antennas.

With reference to the sixth or the eighth possible implementation manner of the second aspect, in a ninth possible implementation manner of the second aspect, the method further includes: determining, by the BBU, a first port group and a second port group, where the first port group includes two logical ports of the four logical ports, and two signals corresponding to the two logical ports are used to generate the first baseband digital signal; the second port group includes the other two logical ports of the four logical ports, and two signals corresponding to the other two logical ports are used to generate the second baseband digital signal; or the first port group includes two logical ports of the four logical ports, and one signal corresponding to one logical port of the two logical ports is used as the first baseband digital signal; the second port group includes the other two logical ports of the four logical ports, and one signal corresponding to one logical port of the other two logical ports is used as the second baseband digital signal.

With reference to the ninth possible implementation manner of the second aspect, in a tenth possible implementation manner of the second aspect, the method further includes: enabling, by the BBU, some of the logical ports to be unconnected, where the some of the logical ports are in a one-to-one correspondence with signals of the four channels of signals that are not used to generate the first baseband digital signal and the second baseband digital signal.

With reference to the ninth or the tenth possible implementation manner of the second aspect, in an eleventh possible implementation manner of the second aspect, the determining, by the BBU, a first port group and a second port group includes: determining, by the BBU, the first port group and the second port group according to a correspondence between the first port group and logical port numbers of the two logical ports and a correspondence between the second port group and logical port numbers of the other two logical ports, where the correspondences are saved or acquired; or the method further includes: after determining the first port group and the second port group, saving, by the BBU, a correspondence between the first port group and logical port numbers of the two logical ports and a correspondence between the second port group and logical port numbers of the other two logical ports.

According to a third aspect, a communications apparatus is provided, where the apparatus includes: an acquiring unit, configured to acquire four channels of signals, where the four channels of signals are in a one-to-one correspondence with four logical ports of the communications apparatus; a processing unit, configured to generate a baseband digital signal based on at least two channels of signals in the four channels of signals; and a transmitting unit, configured to transmit, by the communications apparatus, the baseband digital signal to an RRU that has n physical antenna or physical antennas, so that the RRU transmits, by using the n physical antenna or physical antennas, a radio-frequency signal into which the baseband digital signal is converted, where the n is 1 or 2.

With reference to the third aspect, in a first possible implementation manner of the third aspect, the n is 1, and that the processing unit is configured to generate a baseband digital signal based on at least two channels of signals in the four channels of signals includes: that the processing unit is configured to generate the baseband digital signal by adding up m channels of signals in the four channels of signals, where the m is 2, or 3, or 4.

With reference to the first possible implementation manner of the third aspect, in a second possible implementation manner of the third aspect, the apparatus further includes: a first determining unit, configured to determine m logical ports, where the m channels of signals corresponding to the m logical ports are used to generate the baseband digital signal.

With reference to the second possible implementation manner of the third aspect, in a third possible implementation manner of the third aspect, that the first determining unit is configured to determine the m logical ports includes: that the first determining unit is configured to select all the four logical ports; or that the first determining unit is configured to select two or three of the four logical ports.

With reference to the third possible implementation manner of the third aspect, in a fourth possible implementation manner of the third aspect, the apparatus further includes: a first setting unit, configured to: when the first determining unit selects two or three of the four logical ports, enable a logical port of the four logical ports that is not selected by the first determining unit to be unconnected.

With reference to any one of the second to the fourth possible implementation manners of the third aspect, in a fifth possible implementation manner of the third aspect, that the first determining unit is configured to determine m logical ports includes: that the first determining unit is configured to determine the m logical ports according to saved or acquired logical port numbers of the m logical ports; or the apparatus further includes a first storage unit, where the first storage unit is configured to: after the first determining unit determines the m logical ports, save logical port numbers of the m logical ports.

With reference to the third aspect, in a sixth possible implementation manner of the third aspect, the n is 2 and the baseband digital signal includes a first baseband digital signal and a second baseband digital signal; that the processing unit is configured to generate a baseband digital signal based on at least two channels of signals in the four channels of signals includes: that the processing unit is configured to generate the first baseband digital signal by adding up two signals of the four channels of signals, and generate the second baseband digital signal by adding up the other two signals of the four channels of signals; or that the processing unit is configured to use one signal of the four channels of signals as the first baseband digital signal, and use another signal of the four channels of signals as the second baseband digital signal.

With reference to the sixth possible implementation manner of the third aspect, in a seventh possible implementation manner of the third aspect, the apparatus further includes: a second determining unit, configured to determine a first port group and a second port group, where the first port group includes two logical ports of the four logical ports, and two signals corresponding to the two logical ports are used to generate the first baseband digital signal; the second port group includes the other two logical ports of the four logical ports, and two signals corresponding to the other two logical ports are used to generate the second baseband digital signal; or the first port group includes two logical ports of the four logical ports, and one signal corresponding to one logical port of the two logical ports is used as the first baseband digital signal; the second port group includes the other two logical ports of the four logical ports, and one signal corresponding to one logical port of the other two logical ports is used as the second baseband digital signal.

With reference to the seventh possible implementation manner of the third aspect, in an eighth possible implementation manner of the third aspect, the apparatus further includes: a second setting unit, configured to enable some of the logical ports to be unconnected, where the some of the logical ports are in a one-to-one correspondence with signals of the four channels of signals that are not used to generate the first baseband digital signal and the second baseband digital signal.

With reference to the seventh or the eighth possible implementation manner of the third aspect, in a ninth possible implementation manner of the third aspect, that the second determining unit is configured to determine a first port group and a second port group includes: that the second determining unit is configured to determine the first port group and the second port group according to a correspondence between the first port group and logical port numbers of the two logical ports and a correspondence between the second port group and logical port numbers of the other two logical ports, where the correspondences are saved by a memory or acquired by a receiving unit; or the apparatus further includes: a second storage unit, configured to: after the second determining unit determines the first port group and the second port group, save a correspondence between the first port group and logical port numbers of the two logical ports and a correspondence between the second port group and logical port numbers of the other two logical ports.

With reference to the third aspect or any one of the first to the ninth possible implementation manners of the third aspect, in a tenth possible implementation manner of the third aspect, the apparatus is a BBU.

According to a fourth aspect, a BBU is provided, where the BBU includes a processor, a memory, and a data bus that connects the processor and the memory, where: the processor is configured to acquire four channels of signals, where the four channels of signals are in a one-to-one correspondence with four logical ports of the BBU; the processor is further configured to generate a baseband digital signal based on at least two channels of signals in the four channels of signals; and the processor is further configured to transmit the baseband digital signal to an RRU that has n physical antenna or physical antennas, so that the RRU transmits, by using the n physical antenna or physical antennas, a radio-frequency signal into which the baseband digital signal is converted, where the n is 1 or 2.

With reference to the fourth aspect, in a first possible implementation manner of the fourth aspect, the n is 1, and that the processor is configured to generate a baseband digital signal based on at least two channels of signals in the four channels of signals includes: that the processor is configured to generate the baseband digital signal by adding up m channels of signals in the four channels of signals, where the m is 2, or 3, or 4.

With reference to the first possible implementation manner of the fourth aspect, in a second possible implementation manner of the fourth aspect, the processor is further configured to determine m logical ports, where the m channels of signals corresponding to the m logical ports are used to generate the baseband digital signal.

With reference to the second possible implementation manner of the fourth aspect, in a third possible implementation manner of the fourth aspect, that the processor is configured to determine the m logical ports includes: that the processor is configured to select all the four logical ports; or that the processor is configured to select two or three of the four logical ports.

With reference to the third possible implementation manner of the fourth aspect, in a fourth possible implementation manner of the fourth aspect, the processor is further configured to: when selecting two or three of the four logical ports, enable an unselected logical port of the four logical ports to be unconnected.

With reference to any one of the second to the fourth possible implementation manners of the fourth aspect, in a fifth possible implementation manner of the fourth aspect, that the processor is configured to determine m logical ports includes: that the processor is configured to determine the m logical ports according to saved or acquired logical port numbers of the m logical ports; or after the processor is configured to determine the m logical ports, the memory is configured to save logical port numbers of the m logical ports.

With reference to the fourth aspect, in a sixth possible implementation manner of the fourth aspect, the n is 2 and the baseband digital signal includes a first baseband digital signal and a second baseband digital signal; that the processor is configured to generate a baseband digital signal based on at least two channels of signals in the four channels of signals includes: that the processor is configured to generate the first baseband digital signal by adding up two signals of the four channels of signals, and generate the second baseband digital signal by adding up the other two signals of the four channels of signals; or that the processor is configured to use one signal of the four channels of signals as the first baseband digital signal, and use another signal of the four channels of signals as the second baseband digital signal.

With reference to the sixth possible implementation manner of the fourth aspect, in a seventh possible implementation manner of the fourth aspect, the processor is further configured to determine a first port group and a second port group, where the first port group includes two logical ports of the four logical ports, and two signals corresponding to the two logical ports are used to generate the first baseband digital signal; the second port group includes the other two logical ports of the four logical ports, and two signals corresponding to the other two logical ports are used to generate the second baseband digital signal; or the first port group includes two logical ports of the four logical ports, and one signal corresponding to one logical port of the two logical ports is used as the first baseband digital signal; the second port group includes the other two logical ports of the four logical ports, and one signal corresponding to one logical port of the other two logical ports is used as the second baseband digital signal.

With reference to the seventh possible implementation manner of the fourth aspect, in an eighth possible implementation manner of the fourth aspect, the processor is further configured to enable some of the logical ports to be unconnected, where the some of the logical ports are in a one-to-one correspondence with signals of the four channels of signals that are not used to generate the first baseband digital signal and the second baseband digital signal.

With reference to the seventh or the eighth possible implementation manner of the fourth aspect, in a ninth possible implementation manner of the fourth aspect, that the processor is configured to determine a first port group and a second port group includes: that the processor is configured to determine the first port group and the second port group according to a correspondence between the first port group and logical port numbers of the two logical ports and a correspondence between the second port group and logical port numbers of the other two logical ports, where the correspondences are saved by the memory or acquired by the processor; or the memory is further configured to: after the processor determines the first port group and the second port group, save a correspondence between the first port group and logical port numbers of the two logical ports and a correspondence between the second port group and logical port numbers of the other two logical ports.

By applying the foregoing solutions, a BBU acquires four channels of signals that are in a one-to-one correspondence with four logical ports, and generates a baseband digital signal based on at least two channels of signals in the four channels of signals; after converting the baseband digital signal into a radio-frequency signal, an RRU that has one or two physical antennas transmits the radio-frequency signal by using the one or two physical antennas that the RRU has. Therefore, in a cell combination scenario, a BBU that has four logical ports can process more acquired signals for a 1-channel RRU or a 2-channel RRU, and transmit the signals by using the 1-channel RRU or the 2-channel RRU. In addition, the BBU that has four logical ports can process more acquired signals for a 4-channel RRU or an 8-channel RRU, and transmit the signals by using the 4-channel RRU or the 8-channel RRU, thereby improving cell capacity and enhancing signal transmission quality.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic block diagram of a communications apparatus according to an embodiment of the present invention;
FIG. 2 is a schematic diagram of a correspondence between a logical port and a physical antenna according to another embodiment of the present invention;
FIG. 3a, FIG. 3b, FIG. 3c, and FIG. 3d are schematic diagrams of a correspondence between a logical port and a physical antenna according to another embodiment of the present invention;
FIG. 4a, FIG. 4b, and FIG. 4c are schematic diagrams of a correspondence between a logical port and a physical antenna according to another embodiment of the present invention;
FIG. 5a, FIG. 5b, FIG. 5c, and FIG. 5d are schematic diagrams of a correspondence between a logical port and a physical antenna according to another embodiment of the present invention;
FIG. 6 is a schematic flowchart of a communications method according to another embodiment of the present invention;
FIG. 7 is a schematic block diagram of a communications apparatus according to another embodiment of the present invention;
FIG. 8 is a schematic block diagram of a communications apparatus according to another embodiment of the present invention;
FIG. 9 is a schematic block diagram of a communications apparatus according to another embodiment of the present invention; and
FIG. 10 is a schematic block diagram of a BBU according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

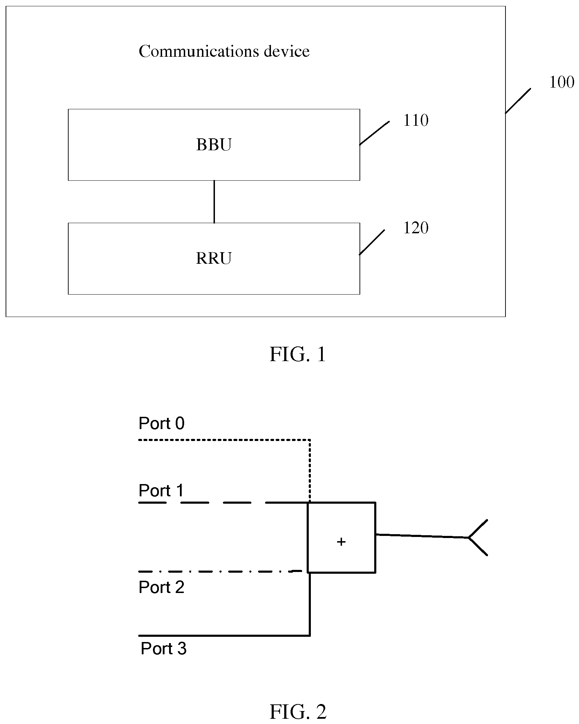

FIG. 1 is a schematic block diagram of a communications device 100 according to an embodiment of the present invention. As shown in FIG. 1, the communications device 100 includes a BBU 110 and an RRU 120 that has n physical antenna or physical antennas; the BBU 110 and the RRU 120 are connected by using an optical fiber; the n is 1 or 2.

The BBU 110 is configured to: acquire four channels of signals; generate a baseband digital signal based on at least two channels of signals in the four channels of signals; transmit the baseband digital signal to the RRU 120 through the optical fiber, where the four channels of signals are in a one-to-one correspondence with four logical ports of the BBU 110.

The RRU 120 is configured to convert the baseband digital signal into a radio-frequency signal, and transmit the radio-frequency signal by using the n physical antenna or physical antennas.

In a scenario of a cell combined from cells covered by RRUs that have different quantities of physical antennas, four logical ports may be configured for the combined cell. Therefore, the BBU 110 may generate four channels of signals that are in a one-to-one correspondence with the four logical ports, generate a baseband digital signal based on at least two channels of signals in the four channels of signals, and then transmit the baseband digital signal to the RRU 120 that has one or two physical antennas by using an optical fiber. After receiving the baseband digital signal transmitted by the BBU 110, the RRU 120 that has one or two physical antennas may convert the baseband digital signal into a radio-frequency signal, and transmit the radio-frequency signal by using the one or two physical antennas that the RRU 120 has.

Therefore, when this embodiment of the present invention is applied, in a cell combination scenario, a BBU that has four logical ports can process more acquired signals for a 1-channel RRU or a 2-channel RRU, and transmit the signals by using the 1-channel RRU or the 2-channel RRU. In addition, the BBU that has four logical ports can process more signals, for example, signals corresponding to the four logical ports, for a 4-channel RRU or an 8-channel RRU, and transmit the signals by using the 4-channel RRU or the 8-channel RRU. The BBU is not affected by that an RRU with which the BBU performs a cell combination may have fewer antennas, thereby avoiding a case in which a quantity of logical ports of signals processed by the BBU must be reduced to implement a cell combination, improving cell capacity, and enhancing signal transmission quality. That is, because the four logical ports are configured for the BBU, the BBU can process signals acquired from the four logical ports, and provide processed signals to the 1-channel RRU or the 2-channel RRU for transmission. In addition, the BBU can enable the 4-channel RRU or the 8-channel RRU, with which the 1-channel RRU or the 2-channel RRU performs a cell combination, to use a four-stream transmission mode, for example, four-stream transmission mode (Transmission Mode, TM) 3 or four-stream TM4, that is based on the four logical ports, thereby improving cell capacity and enhancing signal transmission quality. The foregoing four streams may be considered as the foregoing four channels of signals.

It should be understood that, this embodiment of the present invention may be applied to various cell combination scenarios, for example, a combination scenario such as 8+2, 8+1, 8+4+1, 8+4+2, 4+2, or 4+1.

It should be understood that, in this embodiment of the present invention, the BBU 110 may also select only one signal from the four channels of signals corresponding to the four logical ports, and then transmit the one signal to the RRU 120 as a baseband digital signal. The RRU 120 converts the baseband digital signal into a radio-frequency signal, and transmits the radio-frequency signal by using one physical antenna.

Optionally, in this embodiment of the present invention, the communications device 100 may be a base station. The RRU 120 may have n channel or channels, where the n channel or channels is in a one-to-one correspondence with the n physical antenna or physical antennas.

Optionally, in this embodiment of the present invention, when n is equal to 1, the BBU 110 may obtain the baseband digital signal by adding up at least two channels of signals in the four channels of signals.

Optionally, in this embodiment of the present invention, when n is equal to 2, the BBU 110 may acquire a first baseband digital signal by using one or more signals of the four channels of signals, acquire a second baseband digital signal by using all or some of the other signals, except the one or more signals, of the four channels of signals, and then transmit the first baseband digital signal and the second baseband digital signal to the 2-channel RRU 120. The 2-channel RRU 120 converts the two baseband digital signals into radio-frequency signals, and transmits the radio-frequency signals by using the two physical antennas.

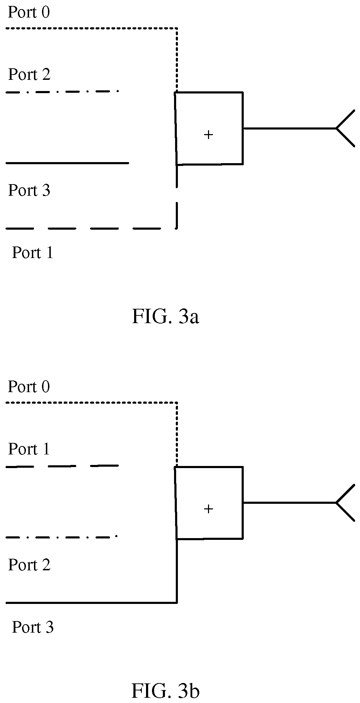

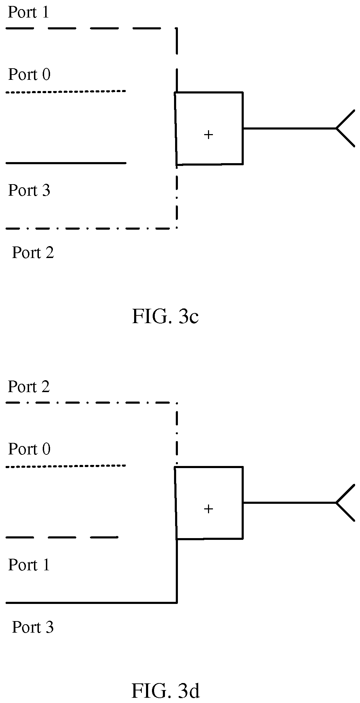

To understand the present invention more clearly, the following first uses n = 1 as an example to describe the communications device 100 according to this embodiment of present invention with reference to FIG. 2, FIG. 3a, FIG. 3b, FIG. 3c, and FIG. 3d. It should be understood that, FIG. 2, FIG. 3a, FIG. 3b, FIG. 3c, and FIG. 3d only show a correspondence between a physical antenna and a logical port and shall not constitute any limitation on a structure of the communications device 100 in this embodiment of the present invention. "+" shown in the diagrams is used to indicate that signals corresponding to port numbers shown on the left are added up to obtain a baseband digital signal.

In this embodiment of the present invention, that the BBU 110 is configured to generate a baseband digital signal based on at least two channels of signals in the four channels of signals may include: that the BBU 110 is configured to generate the baseband digital signal by adding up m channels of signals in the four channels of signals, where the m is 2, or 3, or 4. When m = 2, the BBU 110 may left-multiply a row vector [1 1] by two signals, to obtain the baseband digital signal by adding up two signals. When m = 3, the BBU 110 may left-multiply a row vector [1 1 1] by three signals, to obtain the baseband digital signal by adding up three signals. When m = 4, the BBU 110 may left-multiply a row vector [1 1 1 1] by four channels of signals, to obtain the baseband digital signal by adding up four channels of signals.

For example, as shown in FIG. 2, the BBU 110 may add up all of four channels of signals corresponding to port 0, port 1, port 2, and port 3 to obtain a baseband digital signal. As shown in FIG. 3a, the BBU 110 may add up two signals corresponding to port 0 and port 1 to obtain a baseband digital signal. As shown in FIG. 3b, the BBU 110 may add up two signals corresponding to port 0 and port 3 to obtain a baseband digital signal. As shown in FIG. 3c, the BBU 110 may add up two signals corresponding to port 1 and port 2 to obtain a baseband digital signal. As shown in FIG. 3d, the BBU 110 may add up two signals corresponding to port 2 and port 3 to obtain a baseband digital signal.

Optionally, in this embodiment of the present invention, the BBU 110 may be further configured to determine m logical ports, where the m channels of signals corresponding to the m logical ports are used to generate the baseband digital signal.

Specifically, the BBU 110 may be configured to select all the four logical ports. For example, as shown in FIG. 2, the BBU 110 may select all of four logical ports, that is, port 0, port 1, port 2, and port 3, where four channels of signals corresponding to the four logical ports are used to generate a baseband digital signal.

Alternatively, the BBU 110 may be further configured to select two or three of the four logical ports. For example, as shown in FIG. 3a, the BBU 110 may select port 0 and port 1 from port 0, port 1, port 2, and port 3, where two signals corresponding to the port 0 and the port 1 are used to generate a baseband digital signal. As shown in FIG. 3b, the BBU 110 may select port 0 and port 3 from port 0, port 1, port 2, and port 3, where two signals corresponding to the port 0 and the port 3 are used to generate a baseband digital signal. As shown in FIG. 3c, the BBU 110 may select port 1 and port 2 from port 0, port 1, port 2, and port 3, where two signals corresponding to the port 1 and the port 2 are used to generate a baseband digital signal. As shown in FIG. 3d, the BBU 110 may select port 2 and port 3 from port 0, port 1, port 2, and port 3, where two signals corresponding to the port 2 and the port 3 are used to generate a baseband digital signal. It should be understood that, although only schematic diagrams of selecting two logical ports from four logical ports are shown in the accompanying drawings, the BBU 110 in this embodiment of the present invention may further select three logical ports from the four logical ports. For example, the BBU 110 may select port 0, port 1, and port 2 from port 0, port 1, port 2, and port 3; or the BBU 110 may select port 1, port 2, and port 3 form port 0, port 1, port 2, and port 3; or the BBU 110 may select port 0, port 2, and port 3 from port 0, port 1, port 2, and port 3; or the BBU 110 may select port 0, port 1, and port 3 from port 0, port 1, port 2, and port 3.

Optionally, in this embodiment of the present invention, the BBU 110 is further configured to: when selecting two or three of the four logical ports, enable an unselected logical port of the four logical ports to be unconnected.

For example, as shown in FIG. 3a, the BBU 110 selects port 0 and port 1 from port 0, port 1, port 2, and port 3, and then the BBU 110 may enable port 2 and port 3 to be unconnected. As shown in 3b, the BBU 110 selects port 0 and port 3 from port 0, port 1, port 2, and port 3, and then the BBU 110 may enable port 1 and port 2 to be unconnected. As shown in 3c, the BBU 110 selects port 1 and port 2 from port 0, port 1, port 2, and port 3, and then the BBU 110 may enable port 0 and port 3 to be unconnected. As shown in 3d, the BBU 110 selects port 2 and port 3 from port 0, port 1, port 2, and port 3, and then the BBU 110 may enable port 0 and port 1 to be unconnected.

Optionally, in this embodiment of the present invention, that the BBU 110 is configured to determine m logical ports may include: that the BBU 110 is configured to determine the m logical ports according to saved or acquired logical port numbers of the m logical ports.

Specifically, the BBU 110 may determine the m logical ports according to logical port numbers stored in a memory. For example, logical port numbers stored in the memory are 0, 1, 2, and 3, and then the BBU 110 may determine that logical ports whose logical port numbers are respectively 0, 1, 2, and 3 are the m logical ports. Optionally, that a memory stores a logical port number may be that the memory stores the logical port number when the logical port number is configured in the BBU 110. For example, when the BBU 110 is pre-configured, it is already determined that whether signals corresponding to some of the logical ports are used to generate a baseband digital signal, and then the memory stores, according to the pre-configuration, logical port numbers corresponding to these logical ports. Alternatively, the BBU 110 may acquire a required logical port number, for example, acquire the required logical port number from a core network, and then determine a logical port according to the acquired logical port number. For example, logical port numbers acquired by the BBU 110 from the core network are 0 and 1, and then the BBU may determine that ports whose logical port numbers are 0 and 1 are logical ports.

Alternatively, in this embodiment of the present invention, the BBU 110 is configured to: after determining the m logical ports, save logical port numbers of the m logical ports.

For example, after determining logical ports 0, 1, and 3, the BBU 110 may store logical port numbers 0, 1, and 3 in a memory, to subsequently read a logical port number directly from the memory, and determine a logical port according to the logical port number read from the memory.

Therefore, when this embodiment of the present invention is applied, in a cell combination scenario, a BBU that has four logical ports can process more acquired signals for a 1-channel RRU, and transmit the signals by using the 1-channel RRU. In addition, the BBU that has four logical ports can process more signals, for example, signals corresponding to the four logical ports, for a 4-channel RRU or an 8-channel RRU, and transmit the signals by using the 4-channel RRU or the 8-channel RRU. The BBU is not affected by that an RRU with which the BBU performs a cell combination may have fewer antennas, thereby avoiding a case in which a quantity of logical ports of signals processed by the BBU must be reduced to implement a cell combination, improving cell capacity, and enhancing signal transmission quality.

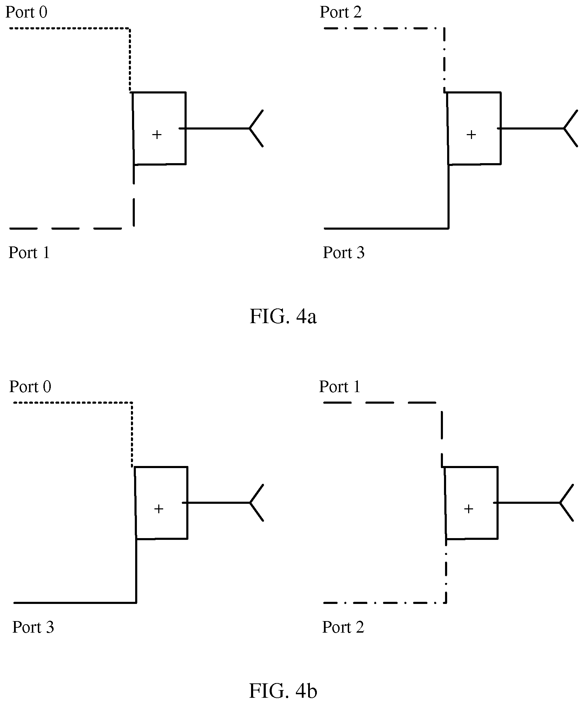

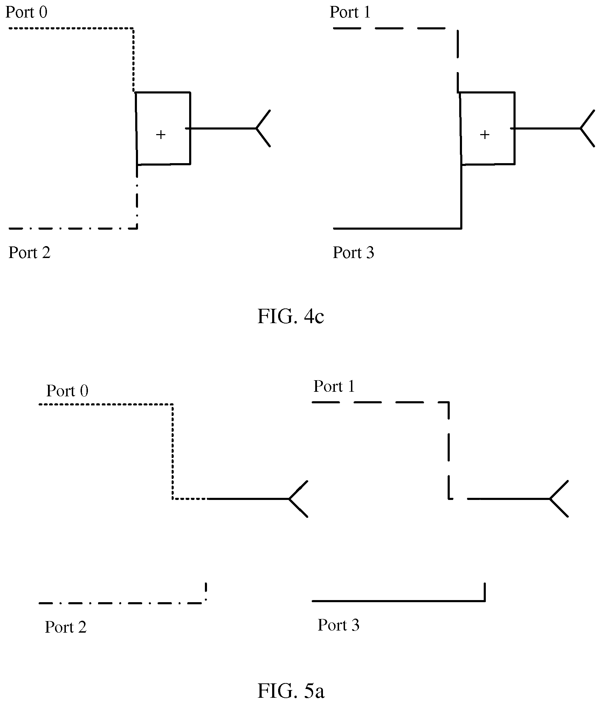

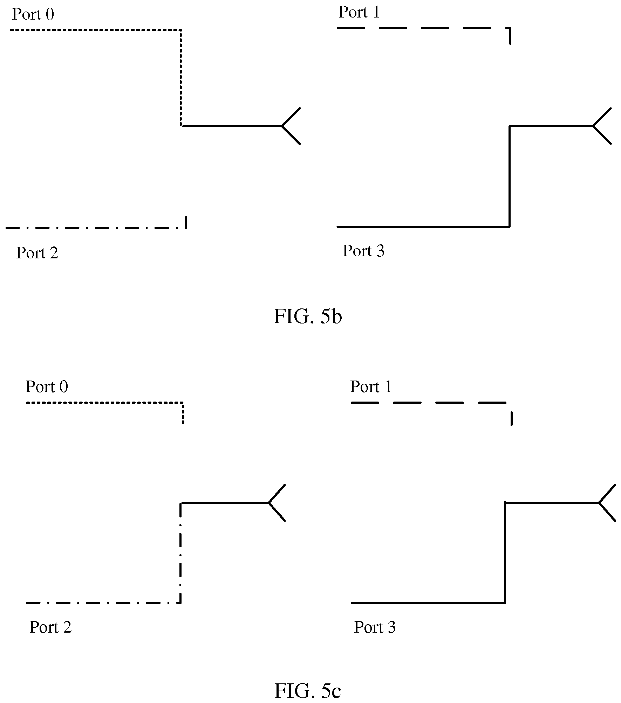

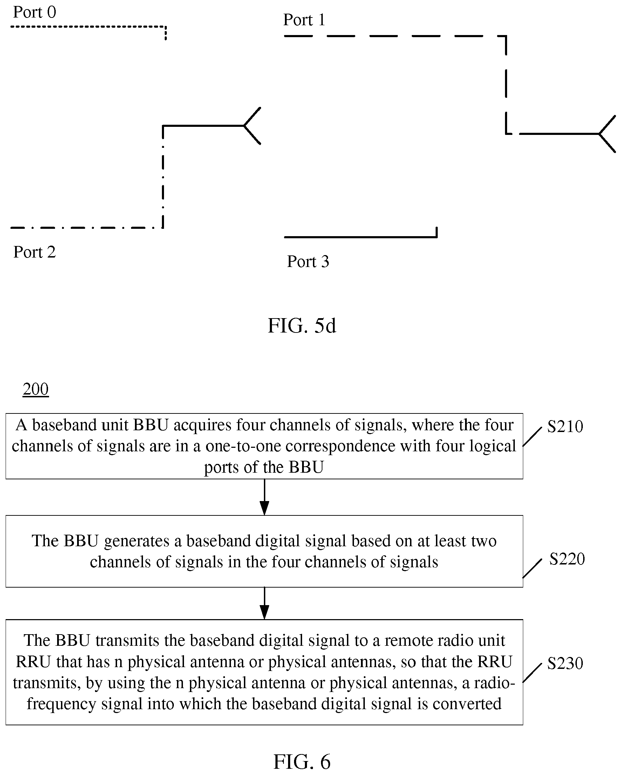

The foregoing has described this embodiment of the present invention by using n = 1 as an example, and the following uses n = 2 as an example to describe this embodiment of the present invention with reference to FIG. 4a, FIG. 4b, FIG. 4c, FIG. 5a, FIG. 5b, FIG. 5c, and FIG. 5d. It should be understood that, FIG. 4a, FIG. 4b, FIG. 4c, FIG. 5a, FIG. 5b, FIG. 5c, and FIG. 5d only show a correspondence between a physical antenna and a logical port and shall not constitute any limitation on a structure of the communications device 100 in this embodiment of the present invention. "+" shown in the diagrams is used to indicate that signals corresponding to port numbers shown on the left are added up to obtain a baseband digital signal.

In this embodiment of the present invention, when n is 2, the baseband digital signal may include a first baseband digital signal and a second baseband digital signal, and that the BBU 110 is configured to generate a baseband digital signal based on at least two channels of signals in the four channels of signals may include: that the BBU 110 is configured to generate the first baseband digital signal by adding up two signals of the four channels of signals, and generate the second baseband digital signal by adding up the other two signals of the four channels of signals. Adding up any two signals of the four channels of signals by the BBU 110 may be implemented by left-multiplying a row vector [1 1] by the any two signals.

Optionally, in this embodiment of the present invention, according to specifically which two signals are added up to obtain the first baseband digital signal and which two signals are added up to obtain the second baseband digital signal, the BBU 110 in this embodiment of the present invention may determine a first port group and a second port group, where the first port group includes two logical ports of the four logical ports, and two signals corresponding to the two logical ports are used to generate the first baseband digital signal; the second port group includes the other two logical ports of the four logical ports, and two signals corresponding to the other two logical ports are used to generate the second baseband digital signal.

For example, as shown in FIG. 4a, the BBU 110 may determine port 0 and port 1 as one port group, and add up signals corresponding to the port 0 and the port 1 to obtain one baseband digital signal; determine port 2 and port 3 as the other port group, and add up signals corresponding to the port 2 and the port 3 to obtain the other baseband digital signal. As shown in FIG. 4b, the BBU 110 may determine port 0 and port 3 as one port group, and add up signals corresponding to the port 0 and the port 3 to obtain one baseband digital signal; determine port 1 and port 2 as the other port group, and add up signals corresponding to the port 1 and the port 2 to obtain the other baseband digital signal. As shown in FIG. 4c, the BBU 110 may determine port 0 and port 2 as one port group, and add up signals corresponding to the port 0 and the port 2 to obtain one baseband digital signal; determine port 1 and port 3 as the other port group, and add up signals corresponding to the port 1 and the port 3 to obtain the other baseband digital signal.

Alternatively, in this embodiment of the present invention, when n is 2, the baseband digital signal may include a first baseband digital signal and a second baseband digital signal. The BBU 110 is configured to use one signal of the four channels of signals as the first baseband digital signal, and use another signal of the four channels of signals as the second baseband digital signal.

Optionally, in this embodiment of the present invention, according to specifically which signal is used as the first baseband digital signal and which signal is used as the second baseband digital signal, the BBU 110 in this embodiment of the present invention may determine a first port group and a second port group, where the first port group includes two logical ports of the four logical ports, and one signal corresponding to one logical port of the two logical ports is used as the first baseband digital signal; the second port group includes the other two logical ports of the four logical ports, and one signal corresponding to one logical port of the other two logical ports is used as the second baseband digital signal.

For example, as shown in FIG. 5a, the BBU 110 may determine port 0 and port 2 as one port group, and use a signal corresponding to port 0 in the port group as one baseband digital signal; determine port 1 and port 3 as the other port group, and use a signal corresponding to port 1 in the port group as the other baseband digital signal. As shown in FIG. 5b, the BBU 110 may determine port 0 and port 2 as one port group, and use a signal corresponding to port 0 in the port group as one baseband digital signal; determine port 1 and port 3 as the other port group, and use a signal corresponding to port 3 in the port group as the other baseband digital signal. For example, as shown in FIG. 5c, the BBU 110 may determine port 0 and port 2 as one port group, and use a signal corresponding to port 2 in the port group as one baseband digital signal; determine port 1 and port 3 as the other port group, and use a signal corresponding to port 3 in the port group as the other baseband digital signal. For example, as shown in FIG. 5d, the BBU 110 may determine port 0 and port 2 as one port group, and use a signal corresponding to port 2 in the port group as one baseband digital signal; determine port 1 and port 3 as the other port group, and use a signal corresponding to port 1 in the port group as the other baseband digital signal.

Optionally, in this embodiment of the present invention, that the RRU 120 is configured to convert the baseband digital signal into a radio-frequency signal, and transmit the radio-frequency signal by using the n physical antenna or physical antennas may include: that the RRU 120 is specifically configured to convert the first baseband digital signal into a first radio-frequency signal, convert the second baseband digital signal into a second radio-frequency signal, transmit the first radio-frequency signal by using one physical antenna of the two physical antennas, and transmit the second radio-frequency signal by using the other physical antenna of the two physical antennas.

For example, as shown in FIG. 4a, the BBU 120 may convert one baseband digital signal that is obtained by adding up a signal corresponding to port 0 and a signal corresponding to port 1 into one radio-frequency signal, and transmit the radio-frequency signal by using one physical antenna. The BBU 120 converts one baseband digital signal that is obtained by adding up a signal corresponding to port 2 and a signal corresponding to port 3 into one radio-frequency signal, and transmits the radio-frequency signal by using the other physical antenna.

Optionally, in this embodiment of the present invention, the BBU 110 is further configured to enable some of the logical ports to be unconnected, where the some of the logical ports are in a one-to one correspondence with signals of the four channels of signals that are not used to generate the first baseband digital signal and the second baseband digital signal.

For example, as shown in FIG. 5a, signals corresponding to port 2 and port 3 are not used to generate a baseband digital signal, and then port 2 and port 3 may be enabled to be unconnected. As shown in FIG. 5b, signals corresponding to port 2 and port 1 are not used to generate a baseband digital signal, and then port 2 and port 1 may be enabled to be unconnected. As shown in FIG. 5c, signals corresponding to port 0 and port 1 are not used to generate a baseband digital signal, and then port 0 and port 1 may be enabled to be unconnected. As shown in FIG. 5d, signals corresponding to port 0 and port 3 are not used to generate a baseband digital signal, and then port 0 and port 3 may be enabled to be unconnected.

Optionally, in this embodiment of the present invention, that the BBU 110 is configured to determine a first port group and a second port group may include: that the BBU 110 is configured to determine the first port group and the second port group according to a correspondence between the first port group and logical port numbers of the two logical ports and a correspondence between the second port group and logical port numbers of the other two logical ports, where the correspondences are saved or acquired.

Specifically, a memory in the BBU 110 may store a correspondence between a port group and a logical port number, so that the BBU 110 can determine, according to the stored correspondence between a logical port group and a logical port number, logical ports included in two logical port groups. Optionally, a correspondence between a logical port number and a logical port group is already determined when the BBU 110 is pre-configured, and then the memory stores the correspondence between a logical port number and a logical port group according to the pre-configuration. For example, a correspondence stored in the memory is that the first port group corresponds to logical port numbers 0 and 2, and logical port numbers corresponding to the second port group are ports 1 and 3, that is, correspondences shown in FIG. 5a, FIG. 5b, FIG. 5c, and FIG. 5d. Then, the BBU 110 may use port 0 and port 2 as the first port group, and use port 1 and port 3 as the second port group.

Alternatively, the BBU 110 may also acquire a correspondence between a logical port group and a logical port number, for example, acquire the correspondence from a core network, and then determine, according to the correspondence, logical ports included in each logical port group. For example, a correspondence provided by the core network is that the first port group corresponds to logical port numbers 0 and 1, and logical port numbers corresponding to the second port group are 2 and 3, that is, correspondences shown in FIG. 4a, FIG. 4b, and FIG. 4c. Then, the BBU 110 may use port 0 and port 1 as the first port group, and use port 2 and port 3 as the second port group.

Alternatively, in this embodiment of the present invention, the BBU 110 is further configured to: after determining the first port group and the second port group, save a correspondence between the first port group and logical port numbers of the two logical ports and a correspondence between the second port group and logical port numbers of the other two logical ports.

Specifically, after determining two port groups, the BBU 110 may store, in a memory, a correspondence between any port group of the two port groups and logical port numbers of logical ports included in the any port group. For example, as shown in FIG. 4a, FIG. 4b, and FIG. 4c, the BBU 110 determines port 0 and port 1 as the first port group, and then may store a correspondence between the first port group and port numbers 0 and 1 in the memory. The BBU 110 may determine port 2 and port 3 as the second port group, and then may store a correspondence between the second port group and the port numbers 2 and 3 in the memory.

It should be understood that, when n = 2, in addition to the implementation manners described above, this embodiment of the present invention may further have other implementation manners. For example, a signal corresponding to one logical port may be used as the first baseband digital signal, and signals corresponding to the other three logical ports may be added up to obtain the second baseband digital signal; or a signal corresponding to one logical port is used as the first baseband digital signal, and signals corresponding to any two logical ports of the other three logical ports are added up to obtain the second baseband digital signal.

Therefore, when this embodiment of the present invention is applied, in a cell combination scenario, a BBU that has four logical ports can process more acquired signals for a 1-channel RRU or a 2-channel RRU, and transmit the signals by using the 1-channel RRU or the 2-channel RRU. In addition, the BBU that has four logical ports can process more signals, for example, signals corresponding to the four logical ports, for a 4-channel RRU or an 8-channel RRU, and transmit the signals by using the 4-channel RRU or the 8-channel RRU. The BBU is not affected by that an RRU with which the BBU performs a cell combination may have fewer antennas, thereby avoiding a case in which a quantity of logical ports of signals processed by the BBU must be reduced to implement a cell combination, improving cell capacity, and enhancing signal transmission quality.

FIG. 6 is a schematic flowchart of a communications method 200 according to an embodiment of the present invention. As shown in FIG. 6, the communications method 200 includes:

S210. A BBU acquires four channels of signals, where the four channels of signals are in a one-to-one correspondence with four logical ports of the BBU.

S220. The BBU generates a baseband digital signal based on at least two channels of signals in the four channels of signals.

S230. The BBU transmits the baseband digital signal to an RRU that has n physical antenna or physical antennas, so that the RRU transmits, by using the n physical antenna or physical antennas, a radio-frequency signal into which the baseband digital signal is converted, where the n is 1 or 2.

In a scenario of a cell combined from cells covered by RRUs that have different quantities of physical antennas, four logical ports may be configured for the combined cell. Therefore, the BBU may generate four channels of signals that are in a one-to-one correspondence with the four logical ports, generate a baseband digital signal based on at least two channels of signals in the four channels of signals, and then transmit the baseband digital signal to the RRU that has one or two physical antennas by using an optical fiber. Therefore, after receiving the baseband digital signal transmitted by the BBU, the RRU that has one or two physical antennas may convert the baseband digital signal into a radio-frequency signal, and transmit the radio-frequency signal by using the one or two physical antennas that the RRU has.

Therefore, when this embodiment of the present invention is applied, in a cell combination scenario, a BBU that has four logical ports can process more acquired signals for a 1-channel RRU or a 2-channel RRU, and transmit the signals by using the 1-channel RRU or the 2-channel RRU. In addition, the BBU that has four logical ports can process more signals, for example, signals corresponding to the four logical ports, for a 4-channel RRU or an 8-channel RRU, and transmit the signals by using the 4-channel RRU or the 8-channel RRU. The BBU is not affected by that an RRU with which the BBU performs a cell combination may have fewer antennas, thereby avoiding a case in which a quantity of logical ports of signals processed by the BBU must be reduced to implement a cell combination, improving cell capacity, and enhancing signal transmission quality. That is, because the four logical ports are configured for the BBU, the BBU can process signals acquired from the four logical ports, and provide processed signals to the 1-channel RRU or the 2-channel RRU for transmission. In addition, the BBU can enable the 4-channel RRU or the 8-channel RRU, with which the 1-channel RRU or the 2-channel RRU performs a cell combination, to use a four-stream transmission mode, for example, four-stream TM3 or four-stream TM4, that is based on the four logical ports, thereby improving cell capacity and enhancing signal transmission quality. The foregoing four streams may be considered as the foregoing four channels of signals.

It should be understood that, this embodiment of the present invention may be applied to various cell combination scenarios, for example, a scenario such as 8+2, 8+1, 8+4+1, 8+4+2, 4+2, or 4+1.

It should be understood that, in this embodiment of the present invention, the BBU may also select only one signal from the four channels of signals corresponding to the four logical ports, and then transmit the one signal to the RRU as a baseband digital signal, so that the RRU converts the baseband digital signal into a radio-frequency signal, and transmits the radio-frequency signal by using one physical antenna.

Optionally, in this embodiment of the present invention, when n is equal to 1, the BBU may obtain the baseband digital signal by adding up at least two channels of signals in the four channels of signals.

Optionally, in this embodiment of the present invention, when n is equal to 2, the BBU may acquire a first baseband digital signal by using one or more signals of the four channels of signals, acquire a second baseband digital signal by using all or some of the other signals, except the one or more signals, of the four channels of signals, and then transmit the first baseband digital signal and the second baseband digital signal to the 2-channel RRU, so that the 2-channel RRU converts the two baseband digital signals into radio-frequency signals and transmits the radio-frequency signals by using the two physical antennas.

Optionally, in this embodiment of the present invention, the method 200 may further include: converting, by the RRU, the baseband digital signal into a radio-frequency signal, and transmitting the radio-frequency signal by using the n physical antenna or physical antennas.

The following uses n = 1 as an example to describe the communications method 200 according to this embodiment of the present invention. For specific examples, refer to examples shown in FIG. 2, FIG. 3a, FIG. 3b, FIG. 3c, and FIG. 3d.

In this embodiment of the present invention, when n = 1, that the BBU generates a baseband digital signal based on at least two channels of signals in the four channels of signals in S220 may include: generating, by the BBU, the baseband digital signal by adding up m channels of signals in the four channels of signals, where the m is 2, or 3, or 4.

In this embodiment of the present invention, the method 200 may further include: determining, by the BBU, m logical ports, where the m channels of signals corresponding to the m logical ports are used to generate the baseband digital signal.

Specifically, the BBU may select all the four logical ports, and herein, reference may be made to the foregoing examples shown in FIG. 2. Alternatively, the BBU may further select two or three of the four logical ports, and herein, reference may be made to the foregoing examples shown in FIG. 3a, FIG. 3b, FIG. 3c, and FIG. 3d. The BBU in this embodiment of the present invention may further select three logical ports from the four logical ports.

Optionally, in this embodiment of the present invention, the method 200 may include: when selecting two or three of the four logical ports, enabling, by the BBU, an unselected logical port of the four logical ports to be unconnected. Herein, reference may also be made to the foregoing examples shown in FIG. 3a, FIG. 3b, FIG. 3c, and FIG. 3d.

In this embodiment of the present invention, the foregoing determining, by the BBU, m logical ports may include: determining, by the BBU, the m logical ports according to saved or acquired logical port numbers of the m logical ports.

Specifically, the BBU may determine the m logical ports according to logical port numbers stored in a memory. Optionally, that a memory stores a logical port number may be that the memory stores the logical port number when the logical port number is configured in the BBU. Alternatively, the BBU may acquire a required logical port number, and then determine a logical port according to the acquired logical port number.

Alternatively, in this embodiment of the present invention, after the BBU determines the m logical ports, the method 200 may further include: saving, by the BBU, logical port numbers of the m logical ports.

Therefore, when this embodiment of the present invention is applied, in a cell combination scenario, a BBU that has four logical ports can process more acquired signals for a 1-channel RRU, and transmit the signals by using the 1-channel RRU. In addition, the BBU that has four logical ports can process more signals, for example, signals corresponding to the four logical ports, for a 4-channel RRU or an 8-channel RRU, and transmit the signals by using the 4-channel RRU or the 8-channel RRU. The BBU is not affected by that an RRU with which the BBU performs a cell combination may have fewer antennas, thereby avoiding a case in which a quantity of logical ports of signals processed by the BBU must be reduced to implement a cell combination, improving cell capacity, and enhancing signal transmission quality.

The foregoing has described this embodiment of the present invention by using n = 1 as an example, and the following uses n = 2 as an example to describe the communications method 200 according to this embodiment of the present invention. For specific examples, refer to examples shown in FIG. 4a, FIG. 4b, FIG. 4c, FIG. 5a, FIG. 5b, FIG. 5c, and FIG. 5d.

In this embodiment of the present invention, the n is 2 and the baseband digital signal includes a first baseband digital signal and a second baseband digital signal; that the BBU generates a baseband digital signal based on at least two channels of signals in the four channels of signals in S220 may include: generating, by the BBU, the first baseband digital signal by adding up two signals of the four channels of signals, and generating the second baseband digital signal by adding up the other two signals of the four channels of signals. Adding up any two signals of the four channels of signals by the BBU may be implemented by left-multiplying a row vector [1 1] by the any two signals.

Optionally, in this embodiment of the present invention, according to specifically which two signals are added up to obtain the first baseband digital signal and which two signals are added up to obtain the second baseband digital signal, the method 200 in this embodiment of the present invention may further include: determining, by the BBU, a first port group and a second port group, where the first port group includes two logical ports of the four logical ports, and two signals corresponding to the two logical ports are used to generate the first baseband digital signal; the second port group includes the other two logical ports of the four logical ports, and two signals corresponding to the other two logical ports are used to generate the second baseband digital signal. Herein, reference may also be made to the foregoing examples shown in FIG. 4a, FIG. 4b, and FIG. 4c.

Alternatively, in this embodiment of the present invention, when n = 2, the baseband digital signal includes a first baseband digital signal and a second baseband digital signal; that the BBU generates a baseband digital signal based on at least two channels of signals in the four channels of signals in S220 may include: using, by the BBU, one signal of the four channels of signals as the first baseband digital signal, and using another signal of the four channels of signals as the second baseband digital signal.

Optionally, in this embodiment of the present invention, the BBU needs to determine specifically which signal is used as the first baseband digital signal and which signal is used as the second baseband digital signal. For example, the method 200 in this embodiment of the present invention may further include: determining, by the BBU, a first port group and a second port group, where the first port group includes two logical ports of the four logical ports, and one signal corresponding to one logical port of the two logical ports is used as the first baseband digital signal; the second port group includes the other two logical ports of the four logical ports, and one signal corresponding to one logical port of the other two logical ports is used as the second baseband digital signal. Herein, reference may be made to the foregoing examples shown in FIG. 5a, FIG. 5b, FIG. 5c, and FIG. 5d.

In this embodiment of the present invention, after the BBU acquires the first baseband digital signal and the second baseband digital signal, the BBU may transmit the first baseband digital signal and the second baseband digital signal to the RRU by using an optical fiber. After the RRU receives the first baseband digital signal and the second baseband digital signal, the RRU may convert the first baseband digital signal into a first radio-frequency signal, convert the second baseband digital signal into a second radio-frequency signal, transmit the first radio-frequency signal by using one physical antenna of the two physical antennas, and transmit the second radio-frequency signal by using the other physical antenna of the two physical antennas.

In this embodiment of the present invention, the method 200 may further include: enabling, by the BBU, some of the logical ports to be unconnected, where the some of the logical ports are in a one-to one correspondence with signals of the four channels of signals that are not used to generate the first baseband digital signal and the second baseband digital signal. Herein, reference may also be made to the foregoing examples shown in FIG. 5a, FIG. 5b, FIG. 5c, and FIG. 5d.

In this embodiment of the present invention, the determining, by the BBU, a first port group and a second port group may include: determining, by the BBU, the first port group and the second port group according to a correspondence between the first port group and logical port numbers of the two logical ports and a correspondence between the second port group and logical port numbers of the other two logical ports, where the correspondences are saved or acquired.

Specifically, a memory in the BBU may store a correspondence between a port group and a logical port number, so that the BBU can determine, according to the stored correspondence between a logical port group and a logical port number, logical ports included in two logical port groups. Optionally, a correspondence between a logical port number and a logical port group is already determined when the BBU is pre-configured, and then the memory stores the correspondence between a logical port number and a logical port group according to the pre-configuration. Alternatively, the BBU may also acquire a correspondence between a logical port group and a logical port number, and then determine, according to the correspondence, logical ports included in each logical port group.

In this embodiment of the present invention, the method 200 may further include: after determining the first port group and the second port group, saving, by the BBU, a correspondence between the first port group and logical port numbers of the two logical ports and a correspondence between the second port group and logical port numbers of the other two logical ports.

It should be understood that, when n = 2, in addition to the implementation manners described above, this embodiment of the present invention may further have other implementation manners. For example, a signal corresponding to one logical port may be used as the first baseband digital signal, and signals corresponding to the other three logical ports may be added up to obtain the second baseband digital signal; or a signal corresponding to one logical port is used as the first baseband digital signal, and signals corresponding to any two logical ports of the other three logical ports are added up to obtain the second baseband digital signal.

It should be noted that, in this embodiment of the present invention, the BBU in the communications method 200 may correspond to the BBU 110 in the communications device 100, and the RRU in the communications method 200 may correspond to the RRU in the communications device 100. The BBU in the communications method 200 may have a corresponding function that the BBU 110 in the communications device 100 has, and the RRU in the communications method 200 may have a corresponding function that the RRU in the communications device 100 has. Embodiments in the communications method 200 and the communications device 100 may be combined and mutually referenced.

Therefore, when this embodiment is applied, in a cell combination scenario, a BBU that has four logical ports can process more acquired signals for a 1-channel RRU or a 2-channel RRU, and transmit the signals by using the 1-channel RRU or the 2-channel RRU. In addition, the BBU that has four logical ports can process more signals, for example, signals corresponding to the four logical ports, for a 4-channel RRU or an 8-channel RRU, and transmit the signals by using the 4-channel RRU or the 8-channel RRU. The BBU is not affected by that an RRU with which the BBU performs a cell combination may have fewer antennas, thereby avoiding a case in which a quantity of logical ports of signals processed by the BBU must be reduced to implement a cell combination, improving cell capacity, and enhancing signal transmission quality.

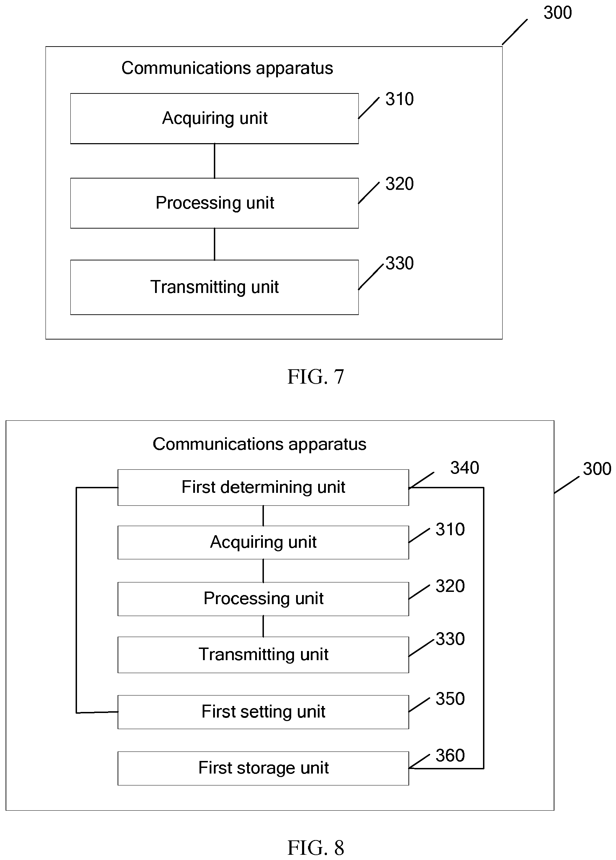

FIG. 7 is a schematic block diagram of a communications apparatus 300 according to an embodiment of the present invention. As shown in FIG. 7, the apparatus 300 includes an acquiring unit 310, a processing unit 320, and a transmitting unit 330.

The acquiring unit 310 is configured to acquire four channels of signals, where the four channels of signals are in a one-to-one correspondence with four logical ports of the apparatus 300.

The processing unit 320 is configured to generate a baseband digital signal based on at least two channels of signals in the four channels of signals.

The transmitting unit 330 is configured to transmit the baseband digital signal to an RRU that has n physical antenna or physical antennas, so that the RRU transmits, by using the n physical antenna or physical antennas, a radio-frequency signal into which the baseband digital signal is converted, where the n is 1 or 2.

Optionally, the communications apparatus 300 in this embodiment of the present invention may be connected to the RRU by using an optical fiber.

Therefore, when this embodiment of the present invention is applied, a BBU that has four logical ports can process more acquired signals for a 1-channel RRU or a 2-channel RRU, and transmit the signals by using the 1-channel RRU or the 2-channel RRU. In addition, the BBU that has four logical ports can process more signals, for example, signals corresponding to the four logical ports, for a 4-channel RRU or an 8-channel RRU, and transmit the signals by using the 4-channel RRU or the 8-channel RRU. The BBU is not affected by that an RRU with which the BBU performs a cell combination may have fewer antennas, thereby avoiding a case in which a quantity of logical ports of signals processed by the BBU must be reduced to implement a cell combination, improving cell capacity, and enhancing signal transmission quality.

Optionally, that the processing unit 320 is configured to generate a baseband digital signal based on at least two channels of signals in the four channels of signals includes: that the processing unit 320 is configured to generate the baseband digital signal by adding up m channels of signals in the four channels of signals, where the m is 2, or 3, or 4.

Optionally, as shown in FIG. 8, when n = 1, the apparatus 300 further includes a first determining unit 340.

The first determining unit 340 is configured to determine m logical ports, where the m channels of signals corresponding to the m logical ports are used to generate the baseband digital signal.

Optionally, that the first determining unit 340 is configured to determine the m logical ports may include: that the first determining unit 340 is configured to select all the four logical ports; or that the first determining unit 340 is configured to select two or three of the four logical ports.

Optionally, as shown in FIG. 8, the apparatus 300 may further include a first setting unit 350.

The first setting unit 350 is configured to: when the first determining unit 340 selects two or three of the four logical ports, enable a logical port of the four logical ports that is not selected by the first determining unit 340 to be unconnected.

Optionally, that the first determining unit 340 is configured to determine m logical ports includes: that the first determining unit 340 is configured to determine the m logical ports according to saved or acquired logical port numbers of the m logical ports.

Alternatively, the apparatus 300 may further include a first storage unit 360. The first storage unit 360 is configured to: after the first determining unit 340 determines the m logical ports, save logical port numbers of the m logical ports.

Optionally, the n is 2 and the baseband digital signal includes a first baseband digital signal and a second baseband digital signal; that the processing unit 320 is configured to generate a baseband digital signal based on at least two channels of signals in the four channels of signals includes: that the processing unit 320 is configured to generate the first baseband digital signal by adding up two signals of the four channels of signals, and generate the second baseband digital signal by adding up the other two signals of the four channels of signals; or that the processing unit 320 is configured to use one signal of the four channels of signals as the first baseband digital signal, and use another signal of the four channels of signals as the second baseband digital signal.

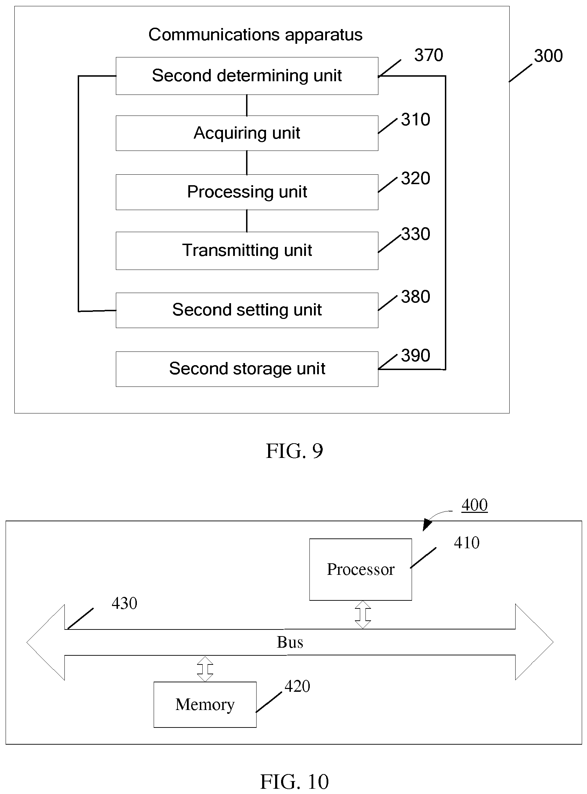

Optionally, as shown in FIG. 9, when n = 2, the apparatus 300 may further include a second determining unit 370.

The second determining unit 370 is configured to determine a first port group and a second port group, where the first port group includes two logical ports of the four logical ports, and two signals corresponding to the two logical ports are used to generate the first baseband digital signal; the second port group includes the other two logical ports of the four logical ports, and two signals corresponding to the other two logical ports are used to generate the second baseband digital signal; or the first port group includes two logical ports of the four logical ports, and one signal corresponding to one logical port of the two logical ports is used as the first baseband digital signal; the second port group includes the other two logical ports of the four logical ports, and one signal corresponding to one logical port of the other two logical ports is used as the second baseband digital signal.

Optionally, as shown in FIG. 9, the apparatus 300 may further include a second setting unit 380.

The second setting unit 380 is configured to enable some of the logical ports to be unconnected, where the some of the logical ports are in a one-to-one correspondence with signals of the four channels of signals that are not used to generate the first baseband digital signal and the second baseband digital signal.

Optionally, that the second determining unit 370 is configured to determine a first port group and a second port group includes: that the second determining unit 370 is configured to determine the first port group and the second port group according to a correspondence between the first port group and logical port numbers of the two logical ports and a correspondence between the second port group and logical port numbers of the other two logical ports, where the correspondences are saved by a memory or acquired by a receiving unit.

Alternatively, as shown in FIG. 9, the apparatus 300 further includes: a second storage unit 390, configured to: after the second determining unit 370 determines the first port group and the second port group, save a correspondence between the first port group and logical port numbers of the two logical ports and a correspondence between the second port group and logical port numbers of the other two logical ports.

Optionally, the apparatus 300 is a BBU.

It should be noted that, the communications apparatus 300 may correspond to the BBU 110 in the communications device 100, and the communications apparatus 300 may also correspond to the BBU in the communications method 200, so that a corresponding procedure implemented by the BBU in the communications method 200 may be implemented. Embodiments in the communications device 100, the communications method 200, and the communications apparatus 300 may be combined and mutually referenced.

Therefore, when this embodiment of the present invention is applied, in a cell combination scenario, a BBU that has four logical ports can process more acquired signals for a 1-channel RRU or a 2-channel RRU, and transmit the signals by using the 1-channel RRU or the 2-channel RRU. In addition, the BBU that has four logical ports can process more signals, for example, signals corresponding to the four logical ports, for a 4-channel RRU or an 8-channel RRU, and transmit the signals by using the 4-channel RRU or the 8-channel RRU. The BBU is not affected by that an RRU with which the BBU performs a cell combination may have fewer antennas, thereby avoiding a case in which a quantity of logical ports of signals processed by the BBU must be reduced to implement a cell combination, improving cell capacity, and enhancing signal transmission quality.

FIG. 10 is a schematic block diagram of a BBU 400 according to an embodiment of the present invention. As shown in FIG. 10, the BBU 400 includes a processor 410, a memory 420, and a data bus 430 that connects the processor 410 and the memory 420; where:
the processor 410 is configured to acquire four channels of signals, where the four channels of signals are in a one-to-one correspondence with four logical ports of the BBU 400;
the processor 410 is further configured to generate a baseband digital signal based on at least two channels of signals in the four channels of signals; and
the processor 410 is further configured to transmit the baseband digital signal to an RRU that has n physical antenna or physical antennas, so that the RRU transmits, by using the n physical antenna or physical antennas, a radio-frequency signal into which the baseband digital signal is converted, where the n is 1 or 2.

Therefore, when this embodiment of the present invention is applied, a BBU that has four logical ports can process more acquired signals for a 1-channel RRU or a 2-channel RRU, and transmit the signals by using the 1-channel RRU or the 2-channel RRU. In addition, the BBU that has four logical ports can process more signals, for example, signals corresponding to the four logical ports, for a 4-channel RRU or an 8-channel RRU, and transmit the signals by using the 4-channel RRU or the 8-channel RRU. The BBU is not affected by that an RRU with which the BBU performs a cell combination may have fewer antennas, thereby avoiding a case in which a quantity of logical ports of signals processed by the BBU must be reduced to implement a cell combination, improving cell capacity, and enhancing signal transmission quality.

It should be noted that, the memory 420 in this embodiment of the present invention may store program code. The processor 410 in this embodiment of the present invention may execute, by invoking the program code stored in the memory 420, an action that needs to be performed.

Optionally, the BBU 400 in this embodiment of the present invention may be connected to the RRU by using an optical fiber.

Optionally, the n is 1, and that the processor 410 is configured to generate a baseband digital signal based on at least two channels of signals in the four channels of signals includes:
that the processor 410 is configured to generate the baseband digital signal by adding up m channels of signals in the four channels of signals, where the m is 2, or 3, or 4.

Optionally, the processor 410 is further configured to determine m logical ports, where the m channels of signals corresponding to the m logical ports are used to generate the baseband digital signal.

Optionally, that the processor 410 is configured to determine the m logical ports includes: that the processor 410 is configured to select all the four logical ports; or that the processor 410 is configured to select two or three of the four logical ports.

Optionally, the processor 410 is further configured to: when selecting two or three of the four logical ports, enable an unselected logical port of the four logical ports to be unconnected.

Optionally, that the processor 410 is configured to determine m logical ports includes: that the processor 410 is configured to determine the m logical ports according to saved or acquired logical port numbers of the m logical ports; or after the processor 410 is configured to determine the m logical ports, the memory 420 is configured to save logical port numbers of the m logical ports.

Optionally, the n is 2 and the baseband digital signal includes a first baseband digital signal and a second baseband digital signal; that the processor 410 is configured to generate a baseband digital signal based on at least two channels of signals in the four channels of signals includes: that the processor 410 is configured to generate the first baseband digital signal by adding up two signals of the four channels of signals, and generate the second baseband digital signal by adding up the other two signals of the four channels of signals; or that the processor 410 is configured to use one signal of the four channels of signals as the first baseband digital signal, and use another signal of the four channels of signals as the second baseband digital signal.

Optionally, the processor 410 is further configured to determine a first port group and a second port group, where the first port group includes two logical ports of the four logical ports, and two signals corresponding to the two logical ports are used to generate the first baseband digital signal; the second port group includes the other two logical ports of the four logical ports, and two signals corresponding to the other two logical ports are used to generate the second baseband digital signal; or the first port group includes two logical ports of the four logical ports, and one signal corresponding to one logical port of the two logical ports is used as the first baseband digital signal; the second port group includes the other two logical ports of the four logical ports, and one signal corresponding to one logical port of the other two logical ports is used as the second baseband digital signal.

Optionally, the processor 410 is further configured to enable some of the logical ports to be unconnected, where the some of the logical ports are in a one-to-one correspondence with signals of the four channels of signals that are not used to generate the first baseband digital signal and the second baseband digital signal.

Optionally, that the processor 410 is configured to determine a first port group and a second port group includes: that the processor 410 is configured to determine the first port group and the second port group according to a correspondence between the first port group and logical port numbers of the two logical ports and a correspondence between the second port group and logical port numbers of the other two logical ports, where the correspondences are saved by the memory 420 or acquired by the processor 410; or the memory 420 is further configured to: after the processor 410 determines the first port group and the second port group, save a correspondence between the first port group and logical port numbers of the two logical ports and a correspondence between the second port group and logical port numbers of the other two logical ports.

It should be noted that, the BBU 400 may correspond to the BBU 110 in the communications device 100, and the BBU 400 may also correspond to the BBU in the communications method 200, so that a corresponding procedure implemented by the BBU in the communications method 200 may be implemented. Embodiments in the communications device 100, the communications method 200, and the communications apparatus 300 may be combined and mutually referenced.

Therefore, when this embodiment of the present invention is applied, in a cell combination scenario, a BBU that has four logical ports can process more acquired signals for a 1-channel RRU or a 2-channel RRU, and transmit the signals by using the 1-channel RRU or the 2-channel RRU. In addition, the BBU that has four logical ports can process more signals, for example, signals corresponding to the four logical ports, for a 4-channel RRU or an 8-channel RRU, and transmit the signals by using the 4-channel RRU or the 8-channel RRU. The BBU is not affected by that an RRU with which the BBU performs a cell combination may have fewer antennas, thereby avoiding a case in which a quantity of logical ports of signals processed by the BBU must be reduced to implement a cell combination, improving cell capacity, and enhancing signal transmission quality.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented by using some interfaces. The indirect couplings or communications connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communications device (100), wherein the communications device comprises a baseband unit BBU and a remote radio unit RRU that has n physical antenna or physical antennas; the BBU and the RRU are connected by using an optical fiber; the n is 1 or 2;
the BBU (110) is configured to: acquire (S210) four channels of signals; generate (S220) a baseband digital signal based on at least two channels of signals in the four channels of signals; transmit (S230) the baseband digital signal to the RRU through the optical fiber, wherein the four channels of signals are in a one-to-one correspondence with four logical ports of the BBU; and
the RRU (120) is configured to convert the baseband digital signal into a radio-frequency signal, and transmit the radio-frequency signal by using the n physical antenna or physical antennas; and
a) wherein the n is 1, and that the BBU(110) is configured to generate a baseband digital signal based on at least two channels of signals in the four channels of signals comprises:
that the BBU(110) is configured to generate the baseband digital signal by adding up m channels of signals in the four channels of signals, wherein the m is 2, or 3, or 4; or
b) wherein the n is 2 and the baseband digital signal comprises a first baseband digital signal and a second baseband digital signal, and that the BBU(110) is configured to generate a baseband digital signal based on at least two channels of signals in the four channels of signals comprises:
that the BBU is configured to generate the first baseband digital signal by adding up two channels of signals of the four channels of signals, and generate the second baseband digital signal by adding up the other two channels of signals of the four channels of signals; or
that the BBU(110) is configured to use one channel of signal of the four channels of signals as the first baseband digital signal, and use another channel of signal of the four channels of signals as the second baseband digital signal.

2. The communications device according to claim 1, wherein the BBU(110) is further configured to determine m logical ports, wherein the m channels of signals corresponding to the m logical ports are used to generate the baseband digital signal.

3. The communications device according to claim 2, wherein that the BBU(110) is configured to determine the m logical ports comprises:
that the BBU(110) is configured to select all the four logical ports; or
that the BBU(110) is configured to select two or three of the four logical ports.

4. The communications device according to claim 3, wherein the BBU(110) is further configured to: when selecting two or three of the four logical ports, enable an unselected logical port of the four logical ports to be unconnected.

5. The communications device according to claim 1, wherein the BBU(110) is further configured to determine a first port group and a second port group; wherein:
the first port group comprises two logical ports of the four logical ports, and two signals corresponding to the two logical ports are used to generate the first baseband digital signal; the second port group comprises the other two logical ports of the four logical ports, and two signals corresponding to the other two logical ports are used to generate the second baseband digital signal; or
the first port group comprises two logical ports of the four logical ports, and one signal corresponding to one logical port of the two logical ports is used as the first baseband digital signal; the second port group comprises the other two logical ports of the four logical ports, and one signal corresponding to one logical port of the other two logical ports is used as the second baseband digital signal.

6. The communications device according to claim 5, wherein the BBU(110) is further configured to enable some of the logical ports to be unconnected, and the some of the logical ports are in a one-to-one correspondence with channels of signals of the four channels of signals that are not used to generate the first baseband digital signal and the second baseband digital signal.

7. A communications method, wherein the communications method comprises:
acquiring(S210), by a baseband unit BBU, four channels of signals, wherein the four channels of signals are in a one-to-one correspondence with four logical ports of the BBU;
generating(S220), by the BBU, a baseband digital signal based on at least two channels of signals in the four channels of signals; and
transmitting(S230), by the BBU, the baseband digital signal to a remote radio unit RRU that has n physical antenna or physical antennas, so that the RRU transmits, by using the n physical antenna or physical antennas, a radio-frequency signal into which the baseband digital signal is converted, wherein the n is 1 or 2; and
a) wherein the n is 1, and the generating, by the BBU, a baseband digital signal based on at least two channels of signals in the four channels of signals comprises:
generating, by the BBU, the baseband digital signal by adding up m channels of signals in the four channels of signals, wherein the m is 2, or 3, or 4; or
b) wherein the n is 2 and the baseband digital signal comprises a first baseband digital signal and a second baseband digital signal, and the generating, by the BBU, a baseband digital signal based on at least two channels of signals in the four channels of signals comprises:
generating, by the BBU, the first baseband digital signal by adding up two channels of signals of the four channels of signals, and generating the second baseband digital signal by adding up the other two channels of signals of the four channels of signals; or
using, by the BBU, one channel of signal of the four channels of signals as the first baseband digital signal, and using another channel of signal of the four channels of signals as the second baseband digital signal.

8. A communications apparatus, wherein the communications apparatus comprises:
an acquiring unit(310), configured to acquire (S210) four channels of signals, wherein the four channels of signals are in a one-to-one correspondence with four logical ports of the communications apparatus;
a processing unit(320), configured to generate (S220) a baseband digital signal based on at least two channels of signals in the four channels of signals; and
a transmitting unit(330), configured to transmit (S230), by the communications apparatus, the baseband digital signal to a remote radio unit RRU that has n physical antenna or physical antennas, so that the RRU transmits, by using the n physical antenna or physical antennas, a radio-frequency signal into which the baseband digital signal is converted, wherein the n is 1 or 2; and
a) wherein the n is 1, and that the processing unit is configured to generate a baseband digital signal based on at least two channels of signals in the four channels of signals comprises:
that the processing unit is configured to generate the baseband digital signal by adding up m channels of signals in the four channels of signals, wherein the m is 2, or 3, or 4; or
b) wherein the n is 2 and the baseband digital signal comprises a first baseband digital signal and a second baseband digital signal, and that the processing unit is configured to generate a baseband digital signal based on at least two channels of signals in the four channels of signals comprises:
that the processing unit is configured to generate the first baseband digital signal by adding up two channels of signals of the four channels of signals, and generate the second baseband digital signal by adding up the other two channels of signals of the four channels of signals; or
that the processing unit is configured to use one channel of signal of the four channels of signals as the first baseband digital signal, and use another channel of signal of the four channels of signals as the second baseband digital signal.

## Patentansprüche

1. Kommunikationsvorrichtung (100), wobei die Kommunikationsvorrichtung eine Basisbandeinheit BBU und eine entfernte Funkeinheit RRU, die n physische Antenne oder physische Antennen aufweist; die BBU und die RRU mithilfe einer optischen Faser verbunden sind; das n 1 oder 2 ist;
die BBU (110) konfiguriert ist: vier Kanäle von Signalen zu erfassen (S210); ein Basisband-Digitalsignal auf Grundlage von mindestens zwei Kanälen von Signalen in den vier Kanälen von Signalen zu erzeugen (S220);
das Basisband-Digitalsignal durch die optische Faser an die RRU zu übertragen (S230), wobei sich die vier Kanäle von Signalen in einer Eins-zu-Eins-Übereinstimmung mit vier logischen Anschlüssen der BBU befinden;
und
die RRU (120) konfiguriert ist, das Basisband-Digitalsignal in ein Hochfrequenzsignal umzuwandeln und das Hochfrequenzsignal mithilfe der n physischen Antenne oder physischen Antennen zu übertragen; und
a) wobei das n 1 ist, und dass die BBU (110) konfiguriert ist, ein Basisband-Digitalsignal auf Grundlage von mindestens zwei Kanälen von Signalen in den vier Kanälen von Signalen zu erzeugen, umfasst:
dass die BBU (110) konfiguriert ist, das Basisband-Digitalsignal durch Addieren von m Kanälen von Signalen in den vier Kanälen von Signalen zu erzeugen, wobei das m 2, 3 oder 4 ist; oder
b) wobei das n 2 ist, und das Basisband-Digitalsignal ein erstes Basisband-Digitalsignal und ein zweites Basisband-Digitalsignal umfasst, und dass die BBU (110) konfiguriert ist, ein Basisband-Digitalsignal auf Grundlage von mindestens zwei Kanälen von Signalen in den vier Kanälen von Signalen zu erzeugen, umfasst:
dass die BBU konfiguriert ist, das erste Basisband-Digitalsignal durch Addieren von zwei Kanälen von Signalen von den vier Kanälen von Signalen zu erzeugen, und das zweite Basisband-Digitalsignal durch Addieren der anderen zwei Kanäle von Signalen der vier Kanäle von Signalen zu erzeugen; oder
dass die BBU (110) konfiguriert ist, einen Kanal von Signal von den vier Kanälen von Signalen als das erste Basisband-Digitalsignal zu nutzen, und einen anderen Kanal eines Signals von den vier Kanälen von Signalen als das zweite Basisband-Digitalsignal zu nutzen.

2. Kommunikationsvorrichtung nach Anspruch 1, wobei die BBU (110) ferner konfiguriert ist, m logische Anschlüsse zu bestimmen, wobei die m Kanäle von Signalen, die den m logischen Anschlüssen entsprechen, genutzt werden, um das Basisband-Digitalsignal zu erzeugen.

3. Kommunikationsvorrichtung nach Anspruch 2, wobei, dass die BBU (110) konfiguriert ist, die m logischen Anschlüsse zu bestimmen, umfasst:
dass die BBU (110) konfiguriert ist, alle vier logischen Anschlüsse auszuwählen; oder
dass die BBU (110) konfiguriert ist, zwei oder drei der vier logischen Anschlüsse auszuwählen.

4. Kommunikationsvorrichtung nach Anspruch 3, wobei die BBU (110) ferner konfiguriert ist: wenn zwei oder drei der vier logischen Anschlüsse ausgewählt werden, zu ermöglichen, dass ein nicht ausgewählter logischer Anschluss der vier logischen Anschlüsse nicht verbunden ist.

5. Kommunikationsvorrichtung nach Anspruch 1, wobei die BBU (110) ferner konfiguriert ist, eine erste Anschlussgruppe und eine zweite Anschlussgruppe zu bestimmen; wobei:
die erste Anschlussgruppe zwei logische Anschlüsse der vier logischen Anschlüsse umfasst und zwei Signale, die den zwei logischen Anschlüssen entsprechen, genutzt werden, um das erste Basisband-Digitalsignal zu erzeugen; die zweite Anschlussgruppe die anderen zwei logische Anschlüsse der vier logischen Anschlüsse umfasst und zwei Signale, die den anderen zwei logischen Anschlüssen entsprechen, genutzt werden, um das zweite Basisband-Digitalsignal zu erzeugen; oder
die erste Anschlussgruppe zwei logische Anschlüsse der vier logischen Anschlüsse umfasst und ein Signal, das einem logischen Anschluss der zwei logischen Anschlüsse entspricht, als das erste Basisband-Digitalsignal genutzt wird; die zweite Anschlussgruppe die anderen zwei logischen Anschlüsse der vier logischen Anschlüsse umfasst und ein Signal, das einem logischen Anschluss der anderen zwei logischen Anschlüsse entspricht, als das zweite Basisband-Digitalsignal genutzt wird.

6. Kommunikationsvorrichtung nach Anspruch 5, wobei die BBU (110) ferner konfiguriert ist, zu ermöglichen, dass einige der logischen Anschlüsse nicht verbunden sind, und sich die einigen der logischen Anschlüsse in einer Eins-zu-Eins-Übereinstimmung mit Kanälen von Signalen der vier Kanäle von Signalen befinden, die nicht genutzt werden, um das erste Basisband-Digitalsignal und das zweite Basisband-Digitalsignal zu erzeugen.

7. Kommunikationsverfahren, wobei das Kommunikationsverfahren Folgendes umfasst:
Erfassen (S210), durch die Basisbandeinheit BBU, von vier Kanälen von Signalen, wobei sich die vier Kanäle von Signalen in einer Eins-zu-Eins-Übereinstimmung mit vier logischen Anschlüssen der BBU befinden;
Erzeugen (S220), durch die BBU, eines Basisband-Digitalsignals auf Grundlage von mindestens zwei Kanälen von Signalen in den vier Kanälen von Signalen; und
Übertragen (S230), durch die BBU, des Basisbandsignals an eine entfernte Funkeinheit RRU, die n physische Antenne oder physische Antennen aufweist, so dass die RRU mithilfe der n physischen Antenne oder physischen Antennen ein Hochfrequenzsignal überträgt, in welches das Basisband-Digitalsignal umgewandelt wird, wobei das n 1 oder 2 ist;
und
a) wobei das n 1 ist, und das Erzeugen, durch die BBU, eines Basisband-Digitalsignals auf Grundlage von mindestens zwei Kanälen von Signalen in den vier Kanälen von Signalen, Folgendes umfasst:
Erzeugen, durch die BBU, des Basisband-Digitalsignals durch Addieren von m Kanälen von Signalen in den vier Kanälen von Signalen zu, wobei das m 2, 3 oder 4 ist; oder
b) wobei das n 2 ist und das Basisband-Digitalsignal ein erstes Basisband-Digitalsignal und ein zweites Basisband-Digitalsignal umfasst, und das Erzeugen, durch die BBU, eines Basisband-Digitalsignals auf Grundlage von mindestens zwei Kanälen von Signalen in den vier Kanälen von Signalen, Folgendes umfasst:
Erzeugen, durch die BBU, des ersten Basisband-Digitalsignals durch Addieren von zwei Kanälen von Signalen von den vier Kanälen von Signalen, und Erzeugen des zweiten Basisband-Digitalsignals durch Addieren der anderen zwei Kanäle von Signalen der vier Kanäle von Signalen; oder
Nutzen, durch die BBU, eines Kanals von Signal von den vier Kanälen von Signalen als das erste Basisband-Digitalsignal, und Nutzen eines anderen Kanals von Signal von den vier Kanälen von Signalen als das zweite Basisband-Digitalsignal.

8. Kommunikationsvorrichtung, wobei die Kommunikationsvorrichtung Folgendes umfasst: eine Erfassungseinheit (310), die konfiguriert ist, vier Kanäle von Signalen zu erfassen (S210), wobei sich die vier Kanäle von Signalen in einer Eins-zu-Eins-Übereinstimmung mit vier logischen Anschlüssen der Kommunikationsvorrichtung befinden;
eine Verarbeitungseinheit (320), die konfiguriert ist, ein Basisband-Digitalsignal auf Grundlage von mindestens zwei Kanälen von Signalen in den vier Kanälen von Signalen zu erzeugen (S220);
und eine Übertragungseinheit (330), die konfiguriert ist, durch die Kommunikationsvorrichtung das Basisbandsignal an eine entfernte Funkeinheit RRU, die n physische Antenne oder physische Antennen aufweist, zu übertragen (S230), so dass die RRU mithilfe der n physischen Antenne oder physischen Antennen ein Hochfrequenzsignal überträgt, in welches das Basisband-Digitalsignal umgewandelt wird, wobei das n 1 oder 2 ist;
und
a) wobei das n 1 ist, und dass die Verarbeitungseinheit konfiguriert ist, ein Basisband-Digitalsignal auf Grundlage von mindestens zwei Kanälen von Signalen in den vier Kanälen von Signalen zu erzeugen, umfasst:
dass die Verarbeitungseinheit konfiguriert ist, das Basisband-Digitalsignal durch Addieren von m Kanälen von Signalen in den vier Kanälen von Signalen zu erzeugen, wobei das m 2, 3 oder 4 ist; oder
b) wobei das n 2 ist und das Basisband-Digitalsignal ein erstes Basisband-Digitalsignal und ein zweites Basisband-Digitalsignal umfasst, und dass die Verarbeitungseinheit konfiguriert ist, ein Basisband-Digitalsignal auf Grundlage von mindestens zwei Kanälen von Signalen in den vier Kanälen von Signalen zu erzeugen, umfasst:
dass die Verarbeitungseinheit konfiguriert ist, das erste Basisband-Digitalsignal durch Addieren von zwei Kanälen von Signalen von den vier Kanälen von Signalen zu erzeugen, und das zweite Basisband-Digitalsignal durch Addieren der anderen zwei Kanäle von Signalen der vier Kanäle von Signalen zu erzeugen; oder
dass die Verarbeitungseinheit konfiguriert ist, einen Kanal von Signal von den vier Kanälen von Signalen als das erste Basisband-Digitalsignal zu nutzen, und einen anderen Kanal von Signal von den vier Kanälen von Signalen als das zweite Basisband-Digitalsignal zu nutzen.

## Revendications

1. Dispositif de communication (100), lequel dispositif de communication comprend une unité de bande de base (BBU) et une unité radio distante (RRU) qui comprend n antenne physique ou antennes physiques ; la BBU et la RRU sont connectées en utilisant une fibre optique, n est égal à 1 ou 2 ;
la BBU (110) est conçue pour : acquérir (S210) quatre canaux de signaux ; générer (S220) un signal numérique de bande de base en fonction d'au moins deux canaux de signaux dans les quatre canaux de signaux ; transmettre (S230) le signal numérique de bande de base à la RRU via la fibre optique, dans lequel les quatre canaux de signaux sont dans une correspondance de un-à-un avec quatre ports logiques de la BBU ; et
la RRU (120) est conçue pour convertir le signal numérique de bande de base en un signal radiofréquence, et transmettre le signal radiofréquence en utilisant la ou les n antennes physiques ; et
a) dans lequel n représente 1, et le fait que la BBU (110) est conçue pour générer un signal numérique de bande de base en fonction d'au moins deux canaux de signaux dans les quatre canaux de signaux le fait comprend que la BBU (110) est conçue pour générer le signal numérique de bande de base en additionnant m canaux de signaux dans les quatre canaux de signaux, où m représente 2, ou 3 ou 4 ; ou
b) dans lequel n représente 2, et le signal numérique de bande de base comprend un premier signal numérique de bande de base et un second signal numérique de bande de base, et le fait que la BBU (110) est conçue pour générer un signal numérique de bande de base en fonction d'au moins deux canaux de signaux des quatre canaux de signaux comprend :
le fait que la BBU est conçue pour générer le premier signal numérique de bande de base en additionnant deux canaux de signaux des quatre canaux de signaux, et générer le second signal numérique de bande de base en additionnant les deux autres canaux de signaux des quatre canaux de signaux ; ou
le fait que la BBU (110) est conçue pour utiliser un canal de signal des quatre canaux de signaux comme premier signal numérique de bande de base, et utiliser un autre canal de signal des quatre canaux de signaux comme second signal numérique de bande de base.

2. Dispositif de communication selon la revendication 1, dans lequel la BBU (110) est conçue pour déterminer m ports logiques, dans lequel les m canaux de signaux correspondant aux m ports logiques sont utilisés pour générer le signal numérique de bande de base.

3. Dispositif de communication selon la revendication 2, dans lequel le fait que la BBU (110) est conçue pour déterminer les m ports logiques comprend :
le fait que la BBU (110) est conçue pour sélectionner tous les quatre ports logiques ; ou
le fait que la BBU (110) est conçue pour sélectionner deux ou trois des quatre ports logiques.

4. Dispositif de communication selon la revendication 3, dans lequel la BBU (110) est en outre conçue pour, lors de la sélection de deux ou trois des quatre ports logiques, activer un port logique non choisi des quatre ports logiques à déconnecter.

5. Dispositif de communication selon la revendication 1, dans lequel la BBU (110) est en outre conçue pour déterminer un premier groupe de ports et un second groupe de ports, dans lequel :
le premier groupe de ports combine deux ports logiques des quatre ports logiques, et deux signaux correspondant aux deux ports logiques sont utilisés pour générer le premier signal numérique de bande de base ; le second groupe de ports comprend les deux autres ports logiques des quatre ports logiques, et deux signaux correspondant aux deux autres ports logiques sont utilisés pour générer le second signal numérique de bande de base ; ou
le premier groupe de ports combine deux ports logiques des quatre ports logiques, et un signal correspondant à un port logique des deux ports logiques est utilisé comme premier signal numérique de bande de base ; le second groupe de ports comprend les deux autres ports logiques des quatre ports logiques, et un signal correspondant à un port logique des deux autres ports logiques est utilisé comme second signal numérique de bande de base.

6. Dispositif de communication selon la revendication 5, dans lequel la BBU (110) est en outre conçue pour activer certains des ports logiques à déconnecter, et certains des ports logiques sont dans une correspondance de un-à-un avec des canaux de signaux des quatre canaux de signaux qui ne sont pas utilisés pour générer le premier signal numérique de bande de base et le second signal numérique de bande de base.

7. Procédé de communication, lequel procédé consiste à :
acquérir (S210), avec une unité de bande de base (BBU), quatre canaux de signaux, dans lequel les quatre canaux de signaux sont dans une correspondance de un-à-un avec quatre ports logiques de la BBU ;
générer (S220), avec la BBU, un signal numérique de bande de base en fonction d'au moins deux canaux de signaux dans les quatre canaux de signaux ; et
transmettre (S230), avec la BBU, le signal numérique de bande de base à une unité radio distante (RRU) qui comprend n antenne physique ou antennes physiques, de sorte que la RRU transmet, en utilisant la ou les n antennes physiques, un signal radiofréquence dans lequel le signal numérique de bande de base a été converti, dans lequel n est égal à 1 ou 2 ; et
a) dans lequel n représente 1, et la génération, avec la BBU, d'un signal numérique de bande de base en fonction d'au moins deux canaux de signaux dans les quatre canaux de signaux consiste à générer, avec la BBU, le signal numérique de bande de base en additionnant m canaux de signaux dans les quatre canaux de signaux, où m représente 2, ou 3 ou 4 ; ou
b) dans lequel n représente 2, et le signal numérique de bande de base comprend un premier signal numérique de bande de base et un second signal numérique de bande de base, et la génération, avec la BBU, d'un signal numérique de bande de base en fonction d'au moins deux canaux de signaux dans les quatre canaux de signaux consiste à :
générer, avec la BBU, le premier signal numérique de bande de base en additionnant deux canaux de signaux des quatre canaux de signaux, et générer le second signal numérique de bande de base en additionnant les deux autres canaux de signaux des quatre canaux de signaux ; ou
utiliser, avec la BBU, un canal de signal des quatre canaux de signaux comme premier signal numérique de bande de base, et utiliser un autre canal de signal des quatre canaux de signaux comme second signal numérique de bande de base.

8. Appareil de communication, lequel appareil de communication comprend :
une unité d'acquisition (310) conçue pour acquérir (S210) quatre canaux de signaux, dans lequel les quatre canaux de signaux sont dans une correspondance de un-à-un avec quatre ports logiques de l'appareil de communication ;
une unité de traitement (320) conçue pour générer (S220) un signal numérique de bande de base en fonction d'au moins deux canaux de signaux dans les quatre canaux de signaux ; et
une unité de transmission (330) conçue pour transmettre (S230), avec l'appareil de communication, le signal numérique de bande de base à une unité radio distante (RRU) qui comprend n antenne physique ou antennes physiques, de sorte que la RRU transmet, en utilisant la ou les n antennes physiques, un signal radiofréquence dans lequel le signal numérique de bande de base a été converti, dans lequel n est égal à 1 ou 2 ; et
a) dans lequel n représente 1, et le fait que l'unité de traitement est conçue pour générer un signal numérique de bande de base en fonction d'au moins deux canaux de signaux dans les quatre canaux de signaux, comprend le fait que l'unité de traitement est conçue pour générer le signal numérique de bande de base en additionnant m canaux de signaux dans les quatre canaux de signaux, où m représente 2, ou 3 ou 4 ; ou
b) dans lequel n représente 2, et le signal numérique de bande de base comprend un premier signal numérique de bande de base et un second signal numérique de bande de base, et le fait que l'unité de traitement est conçue pour générer un signal numérique de bande de base en fonction d'au moins deux canaux de signaux dans les quatre canaux de signaux comprend :
le fait que l'unité de traitement est conçue pour générer le premier signal numérique de bande de base en additionnant deux canaux de signaux des quatre canaux de signaux, et générer le second signal numérique de bande de base en additionnant les deux autres canaux de signaux des quatre canaux de signaux ; ou
le fait que l'unité de traitement est conçue pour utiliser un canal de signal des quatre canaux de signaux comme premier signal numérique de bande de base, et utiliser un autre canal de signal des quatre canaux de signaux comme second signal numérique de bande de base.
